# EUROPÄISCHE PATENTSCHRIFT

(11) **EP 1 149 480 B1**
(45) Veröffentlichungstag und Bekanntmachung des Hinweises auf die Patenterteilung: **04.09.2002**
(21) Anmeldenummer: 00926894.7
(22) Anmeldetag: 12.04.2000
(51) Int. Cl.: H04H 1/00

(54) **VERFAHREN UND VORRICHTUNG ZUM EINBRINGEN VON INFORMATIONEN IN EIN AUDIOSIGNAL UND VERFAHREN UND VORRICHTUNG ZUM ERMITTELN VON IN EINEM AUDIOSIGNAL EINGEBRACHTEN INFORMATIONEN**
METHOD AND DEVICE FOR INSERTING INFORMATION INTO AN AUDIO SIGNAL, AND METHOD AND DEVICE FOR DETECTING INFORMATION INSERTED INTO AN AUFIO SIGNAL
PROCEDE ET DISPOSITIF POUR INTRODUIRE DES INFORMATIONS DANS UN SIGNAL AUDIO, PROCEDE ET DISPOSITIF POUR DETECTER DES INFORMATIONS INTRODUITES DANS UN SIGNAL AUDIO

(30) Priorität: 12.08.1999 DE 19938095
(43) Veröffentlichungstag der Anmeldung: 31.10.2001
(73) Patentinhaber: Fraunhofer-Gesellschaft zur Förderung der angewandten Forschung e.V., 80636 München (DE)
(72) Erfinder: NEUBAUER, Christian, D-90411 Nürnberg (DE); ALLAMANCHE, Eric, D-90489 Nürnberg (DE); HERRE, Jürgen, D-91054 Buckenhof (DE); SPORER, Thomas, D-90766 Fürth (DE); KULESSA, Ralph, D-93073 Neutraubling (DE); BRANDENBURG, Karlheinz, D-91054 Erlangen (DE); GEIGER, Ralf, D-91054 Buckenhof (DE)
(74) Vertreter: Schoppe, Fritz, Dipl.-Ing.
(86) Internationale Anmeldenummer: EP0003292
(87) Internationale Veröffentlichungsnummer: WO01013552

(56) Entgegenhaltungen:
- WO-A-97/31440
- WO-A-97/33391
- US-A- 5 793 759
- US-A- 5 805 583

## Beschreibung

Die vorliegende Erfindung bezieht sich allgemein auf das Codieren und Decodieren von Audiosignalen und insbesondere auf das Einbringen von Informationen in ein Audiosignal und das Ermitteln der in ein Audiosignal eingebrachten Informationen. Insbesondere auf dem Gebiet des Urheberrechtsschutzes für Audiosignale dient die vorliegende Erfindung dazu, Urheberrechts- bzw. Kopierinformationen in ein Audiosignal unhörbar einzubringen.

Mit zunehmender Verbreitung des Internets hat auch die Musikpiraterie drastisch zugenommen. An vielen Stellen im Internet können Musikstücke bzw. allgemein Audiosignale heruntergeladen werden. In den allerwenigsten Fällen werden hierbei Urheberrechte beachtet. Insbesondere wird sehr selten die Erlaubnis des Urhebers eingeholt, sein Werk zur Verfügung zu stellen. Noch seltener werden Gebühren an den Urheber bezahlt, die der Preis für ein rechtmäßiges Kopieren sind. Darüberhinaus findet ein unkontrolliertes Kopieren von Werken statt, was in den allermeisten Fällen ebenfalls ohne Berücksichtigung von Urheberrechten geschieht.

Wenn Musikstücke über das Internet von einem Provider für Musikstücke rechtmäßig erworben werden, erzeugt der Provider üblicherweise einen Header, in dem Copyright-Informationen sowie beispielsweise eine Kundennummer eingebracht sind, wobei die Kundennummer eindeutig auf den aktuell vorliegenden Käufer hinweist. Es ist ferner bekannt, Kopiererlaubnisinformationen in diesen Header einzufügen, welche die verschiedensten Arten von Kopierrechten signalisieren, wie z. B. daß das Kopieren des aktuellen Stücks vollständig untersagt ist, daß das Kopieren des aktuellen Stücks nur ein einziges Mal erlaubt ist, daß das Kopieren des aktuellen Stücks völlig frei ist, etc.

Der Kunde verfügt über einen Decodierer, der den Header einliest und unter Beachtung der erlaubten Handlungen beispielsweise nur eine einzige Kopie zuläßt und weitere Kopien verweigert.

Dieses Konzept zur Beachtung der Urheberrechte funktioniert jedoch nur für Kunden, die sich legal verhalten.

Illegale Kunden haben üblicherweise ein wesentliches Potential an Kreativität, um mit einem Header versehene Musikstücke zu "knacken". Hier zeigt sich bereits der Nachteil der beschriebenen Vorgehensweise zum Schutz von Urheberrechten. Ein solcher Header kann einfach entfernt werden. Alternativ könnte ein illegaler Benutzer auch einzelne Einträge in dem Header modifizieren, um beispielsweise aus dem Eintrag "Kopieren untersagt" einen Eintrag "Kopieren völlig frei" zu machen. Denkbar ist auch der Fall, daß ein illegaler Kunde seine eigene Kundennummer aus dem Header entfernt und dann das Musikstück auf seiner oder einer anderen Homepage im Internet anbietet. Ab diesem Moment ist es nicht mehr möglich, den illegalen Kunden zu ermitteln, da er seine Kundennummer entfernt hat. Versuche, solche Verletzungen des Urheberrechts zu unterbinden, werden daher zwangsläufig ins Leere laufen, da die Kopierinformationen aus dem Musikstück entfernt worden sind bzw. modifiziert worden sind, und da der illegale Kunde, der dies tat, nicht mehr ermittelt werden kann, um ihn zur Verantwortung zu ziehen. Wäre stattdessen eine sichere Einbringung von Informationen in das Audiosignal vorhanden, so könnten staatliche Behörden, die Urheberrechtsverletzungen verfolgen, verdächtige Musikstücke im Internet ermitteln und beispielsweise die Benutzeridentifikation solcher illegalen Stücke feststellen, um den illegalen Benutzern das Handwerk zu legen.

Aus der WO 97/33391 ist ein Codierverfahren zur Einbringung eines nicht hörbaren Datensignals in ein Audiosignal bekannt. Dabei wird das Audiosignal, in das das nicht hörbare Datensignal eingebracht werden soll, in den Frequenzbereich umgewandelt, um mittels eines psychoakustischen Modells die Maskierungsschwelle des Audiosignals zu bestimmen. Das Datensignal, das in das Audiosignal eingebracht werden soll, wird mit einem Pseudorauschsignal multipliziert, um ein frequenzmäßig gespreiztes Datensignal zu schaffen. Das frequenzmäßig gespreizte Datensignal wird dann mit der psychoakustischen Maskierungsschwelle gewichtet, derart, daß die Energie des frequenzmäßig gespreizten Datensignals immer unterhalb der Maskierungsschwelle liegt. Schließlich wird das gewichtete Datensignal dem Audiosignal überlagert, wodurch ein Audiosignal erzeugt wird, in das das Datensignal unhörbar eingebracht ist. Das Datensignal kann zum einen dazu verwendet werden, die Reichweite eines Senders zu ermitteln. Alternativ kann das Datensignal zur Kennzeichnung von Audiosignalen verwendet werden, um eventuelle Raubkopien ohne weiteres zu identifizieren, da jeder Tonträger beispielsweise in Form einer CompactDisc ab Werk mit einer individuellen Kennung versehen wird. Weitere beschriebene Anwendungsmöglichkeiten des Datensignals bestehen im Fernsteuern von Audiogeräten in Analogie zum "VPS"-Verfahren beim Fernsehen.

Dieses Verfahren liefert bereits eine hohe Sicherheit gegenüber Musikpiraten, da sie zum einen unter Umständen gar nicht wissen, daß das Musikstück, das sie gerade vervielfältigen, gekennzeichnet ist. Darüberhinaus ist es nahezu unmöglich, ohne einen autorisierten Decodierer das Datensignal, das unhörbar in dem Audiosignal vorhanden ist, zu extrahieren.

Audiosignale liegen, wenn sie von einer CompactDisc stammen, als 16-Bit-PCM-Abtastwerte vor. Ein Musikpirat könnte beispielsweise die Abtastrate bzw. die Pegel oder Phasen der Abtastwerte manipulieren, um das Datensignal unlesbar, d. h. undecodierbar zu machen, wodurch die Urheberrechtsinformationen ebenfalls aus dem Audiosignal entfernt wären. Dies wird jedoch nicht ohne signifikante Qualitätseinbußen möglich sein. Solchermaßen in Audiosignale eingebrachte Daten können daher auch in Analogie zu Banknoten als "Wasserzeichen" bezeichnet werden.

Nachteilig an dem beschriebenen Verfahren ist die Tatsache, daß es sehr unflexibel ist. Dies zeigt sich darin, daß das einmal eingebrachte Wasserzeichen nicht mehr geändert bzw. "ergänzt" werden kann. Eine solche "Ergänzung" wäre beispielsweise von einem autorisierten Decodierer gefordert, der ein Kopier-Bit in dem Audiosignal setzt, um zu signalisieren, daß der Benutzer eine Kopie gezogen hat, und daß nun keine weiteren Kopien mehr möglich sind. Ein solches nachträgliches Modifizieren des Wasserzeichens ist bei dem bekannten verfahren nicht durchführbar. Das Datensignal belegt stattdessen die gesamte Energie bis zur psychoakustischen Maskierungsschwelle. Eine zusätzlich eingeführte Signalenergie in Form eines gesetzten Kopier-Bits würde zu hörbaren Qualitätseinbußen führen, welche selbstverständlich nicht erwünscht sind.

Ein weiteres Problem beim bekannten Verfahren besteht darin, daß, wenn viele Zusatzdaten in das Audiosignal eingebracht werden, die Decodierer immer komplexer und aufwendiger werden. Decodierer sind jedoch Massenartikel, die, um auf dem Markt bestehen zu können, sehr preisgünstig angeboten werden müssen. Alternativ ausgedrückt wird sich ein Verfahren zur wirksamen Durchsetzung von Urheberrechten selbst nicht durchsetzen, wenn es zu einer signifikanten Verteuerung der Decodierer führt. Werden dagegen nur wenig Daten in das Audiosignal eingebracht, um die Decodierer nicht zu verteuern, so ist die Anwendungsmöglichkeit des Verfahrens wiederum sehr begrenzt, da unter Umständen nicht alle Informationen eingebracht werden können, die eingebracht werden sollten.

Die Aufgabe der vorliegenden Erfindung besteht darin, ein flexibleres Konzept zum Einbringen von Informationen in ein Audiosignal zu schaffen.

Diese Aufgabe wird durch ein Verfahren zum Einbringen von Informationen in ein Audiosignal nach Patentanspruch 1 oder durch eine Vorrichtung zum Einbringen von Informationen in ein Audiosignal nach Patentanspruch 24 gelöst.

Eine weitere Aufgabe der vorliegenden Erfindung besteht darin, ein flexibles Konzept zum Ermitteln von Informationen, die in einem Audiosignal eingebracht sind, zu schaffen.

Diese Aufgabe wird durch ein Verfahren zum Ermitteln von Informationen, die in einem Audiosignal eingebracht sind, nach Patentanspruch 14 oder durch eine Vorrichtung zum Ermitteln von Informationen, die in ein Audiosignal eingebracht sind, nach Patentanspruch 25 gelöst.

Der vorliegenden Erfindung liegt die Erkenntnis zugrunde, daß nur ein flexibles Konzept der Informationsaufbereitung einerseits zu preisgünstigen Decodierern und andererseits zur Berücksichtigung der nötigen Informationen für einen wirksamen Urheberrechtsschutz führen wird. Die Informationsaufbereitung wird dadurch erreicht, daß die in das Audiosignal einzubringenden Informationen über zumindest zwei Informationskanäle verteilt werden. Ein erster Informationskanal wird vorzugsweise die Kopierinformationen umfassen. Die Kopierinformationen können üblicherweise durch eine relativ geringe Datenmenge dargestellt werden und sind wesentlich, um ein unerlaubtes Kopieren, d. h. eine Verletzung von Urheberrechten, zu unterbinden. Weitere Informationen, wie z. B. der ISRC (ISRC = International Standard Recording Code) sowie eine Identifikation des Kunden sowie weitere interessierende Daten können in einem zweiten Informationskanal untergebracht werden. Die beiden Kanäle sind voneinander unabhängig decodierbar. Dies ermöglicht den Einsatz von sogenannten skalierbaren Decodierern. Sehr einfach ausgeführte Decodierer werden nur den ersten Kanal, der vorzugsweise Kopierinformationen enthält, decodieren. Solche Decodierer können daher sehr preisgünstig angeboten werden, da sie nicht die gesamte Informationsmenge ermitteln müssen. Aufwendigere Decodierer dagegen, bei denen der Preis nicht die entscheidende Rolle spielt, werden ausgestattet sein, um auch den zweiten Informationskanal bzw. einen dritten, vierten usw. Informationskanal zu decodieren, um sämtliche Informationen, die ursprünglich in das Audiosignal eingebracht worden sind, zu eruieren.

Angeknüpft an das eingangs erläuterte Szenario würde ein üblicher User nur den ersten Informationskanal decodieren und im Falle der Anfertigung einer Kopie ein Kopierbit im Wasserzeichen setzen, um weitere legale Kopien zu unterbinden, wenn der Benutzer lediglich eine Lizenz für eine einzige Kopie gekauft hat. Dieses Verfahren wird als Remark-Verfahren bezeichnet.

Ein aufwendigerer Decodierer, beispielsweise im Besitz von Behörden, die eine Durchsetzung von Urheberrechten zum Ziel haben, könnte dazu verwendet werden, den zweiten Informationskanal zu decodieren, um im Falle eines verdächtigen Stücks bzw. überhaupt bei jedem Musikstück den berechtigten Benutzer anhand seiner Benutzerkennung zu identifizieren. Sollte ein Benutzer das Musikstück unerlaubt kopiert haben, so könnte er, da seine Identifikation über den zweiten Informationskanal decodiert werden kann, ermittelt werden und zur Rechenschaft gezogen werden.

Das erfindungsgemäße Verfahren liefert somit den Vorteil einer mehrkanaligen Aufbereitung der in das Audiosignal einzubringenden Informationen, was wiederum den Einsatz von skalierbaren Decodierern ermöglicht.

Bei der Verwendung mehrerer Kanäle muß eine Synchronisation der Kanäle durchgeführt werden. Üblicherweise wird jeder Kanal mit einer geeigneten Präambel synchronisiert. Dadurch erniedrigt sich jedoch die Nettodatenrate. Erfindungsgemäß wird, um die Datenrate für den zweiten Informationskanal maximal zu halten, derselbe mittels des ersten Informationskanals synchronisiert. Dies wird dadurch erreicht, daß auch der erste Informationskanal in einzelne Teilkanäle oder "Zeitschlitze" unterteilt wird.

Die Unterteilung bereits des ersten Informationskanals, der vorzugsweise die nötigen Kopierinformationen aufweist, ermöglicht es auch, sogenannte "Platzhalterstellen" vorzusehen, d. h. Zeitschlitze, die beim ersten Einbringen des Wasserzeichens in das Audiosignal freibleiben, d. h. keine Information tragen, wodurch aufgrund der psychoakustischen Gewichtung an Stellen im Audiosignal, die für die Platzhalter vorgesehen sind, keine Energie eingebracht wird, derart, daß auch eine nachträgliche Einbringung von Informationen, d. h. Remarken, beispielsweise bezüglich eines erfolgten Kopiervorgangs durchgeführt werden kann, ohne das ursprüngliche Wasserzeichen zu verändern, und ohne hörbare Störungen in das Audiosignal einzubringen.

Das erfindungsgemäße Verfahren verwendet eine Art TDMA-Verarbeitung (TDMA = Time Division Multiple Access) für den ersten Informationskanal und eine Art CDMA-Verarbeitung (CDMA = Code Division Multiple Access) zur Codierung des ersten Informationskanals und eines weiteren Informationskanals. Die CDMA-Verarbeitung erlaubt eine Trennung der Informationskanäle beim Ermitteln der in das Audiosignal eingebrachten Informationen, während die TDMA-Verarbeitung ein flexibles Wasserzeichen ermöglicht, d. h. ein Wasserzeichen, bei dem nachträglich noch Bits gesetzt werden können. Der zweite Informationskanal kann ebenfalls einer TDMA-Verarbeitung unterzogen sein. Dies ist jedoch für die vorliegende Erfindung nicht wesentlich.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein Blockschaltbild zur Verdeutlichung des erfindungsgemäßen Konzepts zum Einbringen von Informationen in ein Audiosignal;
- Fig. 2: eine detailliertere Darstellung zur Verdeutlichung des Bildens des ersten Informationskanals;
- Fig. 3: eine detaillierte Darstellung zur Verdeutlichung des Bildens des zweiten Informationskanals;
- Fig. 4: eine detaillierte Darstellung zur Verdeutlichung des Bildens des Codemultiplex-Zeitsignals vor dem Gewichten;
- Fig. 5: eine detaillierte Darstellung zur Verdeutlichung des Bildens des Audiosignals, in das die Informationen eingebracht sind, unter Verwendung des ursprünglichen Audiosignals und des Codemultiplex-Zeitsignals;
- Fig. 6A: eine allgemeine Übersicht über die TDMA/CDMA-Verarbeitung der in das Audiosignal einzubringenden Informationen;
- Fig. 6B: eine Übersicht über das Datenformat zu verschiedenen Zeitpunkten während des Verarbeitens des ersten Informationskanals anhand eines bevorzugten Ausführungsbeispiels, das vier Zeitschlitze aufweist;
- Fig. 7: ein Blockschaltbild zur Erläuterung einer Vorrichtung zum Ermitteln von in einem Audiosignal eingebrachten Informationen gemäß einem bevorzugten Ausführungsbeispiel;
- Fig. 8: eine detaillierte Darstellung zur Veranschaulichung der Ermittlung des ersten und des zweiten Informationskanals;
- Fig. 9: ein Zeitdiagramm eines beispielhaften Zeitsignals nach dem Matched-Filter für den ersten Informationskanal;
- Fig. 10: eine Prinzipdarstellung einer Schaltung zum Erzeugen von Bitströmen aus Korrelatorausgangssignalen;
- Fig. 11: eine detaillierte Darstellung zum Demultiplexen und Identifizieren der einzelnen verarbeiteten Datensequenzen, die die erste, die zweite und die weiteren Informationseinheiten darstellen;
- Fig. 12: eine detaillierte Darstellung einer Schaltung zum Extrahieren der ersten, der zweiten sowie der weiteren Informationseinheiten aus dem ersten Informationskanal und zum Ausgeben eines Sychronisationssignals für den zweiten Informationskanal;
- Fig. 13: eine zeitliche Darstellung des Pegelverlaufs an dem Punkt P von Fig. 12;
- Fig. 14: eine detaillierte Darstellung der Schaltung zum Ermitteln der Informationseinheiten des zweiten Informationskanals gemäß einem bevorzugten Ausführungsbeispiel der vorliegenden Erfindung, bei dem der zweite Informationskanal ebenfalls einer TDMA-Verarbeitung unterzogen ist.

Bevor detaillierter auf die einzelnen Figuren eingegangen wird, wird der systemtheoretische Hintergrund der vorliegenden Erfindung kurz beleuchtet. Generell darf das Einbringen der Informationen in das Audiosignal zu keiner bzw. nur einer sehr schwer hörbaren Qualitätsverschlechterung des Audiosignals führen. Um festzustellen, wieviel Energie das Signal, das die einzubringenden Informationen darstellt, haben darf, wird unter Verwendung eines psychoakustischen Modells die Maskierungsschwelle des Audiosignals fortlaufend berechnet. Die frequenzselektive Berechnung der Maskierungsschwelle unter Verwendung beispielsweise der kritischen Bänder sowie eine Vielzahl weiterer psychoakustischer Modelle sind in der Technik bekannt. Beispielhaft wird auf den Standard MPEG2-AAC (ISO/IEC 13818-7) verwiesen.

Das psychoakustische Modell führt zu einer Maskierungsschwelle für ein Kurzzeitspektrum des Audiosignals. Üblicherweise wird die Maskierungsschwelle über der Frequenz variieren. Per Definition wird angenommen, daß ein in das Audiosignal eingebrachtes Signal dann unhörbar sein wird, wenn die Energie dieses Signals unterhalb der Maskierungsschwelle ist. Die Maskierungsschwelle hängt stark von der Zusammensetzung des Audiosignals ab. Rauschhafte Signale haben eine höhere Maskierungsschwelle als sehr tonale Signale. Die Energie des Signals, das in das Audiosignal eingebracht wird, variiert daher stark über der Zeit. Üblicherweise wird zum Decodieren der in ein Audiosignal eingebrachten Informationen ein bestimmtes Signal/Rausch-Verhältnis benötigt. Dabei kann es vorkommen, daß bei sehr tonalen Audiosignalabschnitten die Energie des zusätzlich eingebrachten Signals derart gering wird, daß das Signal/Rausch-Verhältnis zum sicheren Decodieren nicht mehr ausreicht. Ein Decodierer kann daher in solchen Bereichen einzelne Bits nicht mehr korrekt decodieren. Systemtheoretisch gesehen kann daher das Einbringen von Informationen in ein Audiosignal in Abhängigkeit von der psychoakustischen Maskierungsschwelle als das Übertragen eines Datensignals über einen Kanal mit stark variierender Störenergie betrachtet werden, wobei das Audiosignal, d. h. das Musiksignal, als Störsignal aufgefaßt wird.

Um trotz des stark variierenden Übertragungskanals eine sichere Detektion zu gewährleisten, wird erfindungsgemäß ein zweifaches Spreizungsverfahren für den ersten Informationskanal eingesetzt. Dadurch und aufgrund der Tatsache, daß die Informationen während des gesamten Audiostücks zyklisch in das Audiosignal eingebracht werden, wird eine sichere Detektion während nahezu des gesamten Audiosignals, d. h. Musikstücks, sichergestellt. Bevorzugterweise wird, wie es weiter hinten ausführlicher dargestellt wird, ferner ein Interleaver eingesetzt, der eine Verschachtelung der einzelnen TDMA-Kanäle durchführt, um eine größere Unabhängigkeit von "Burst-Fehlern", d. h. längeren tonalen Abschnitten im Audiosignal, zu erreichen.

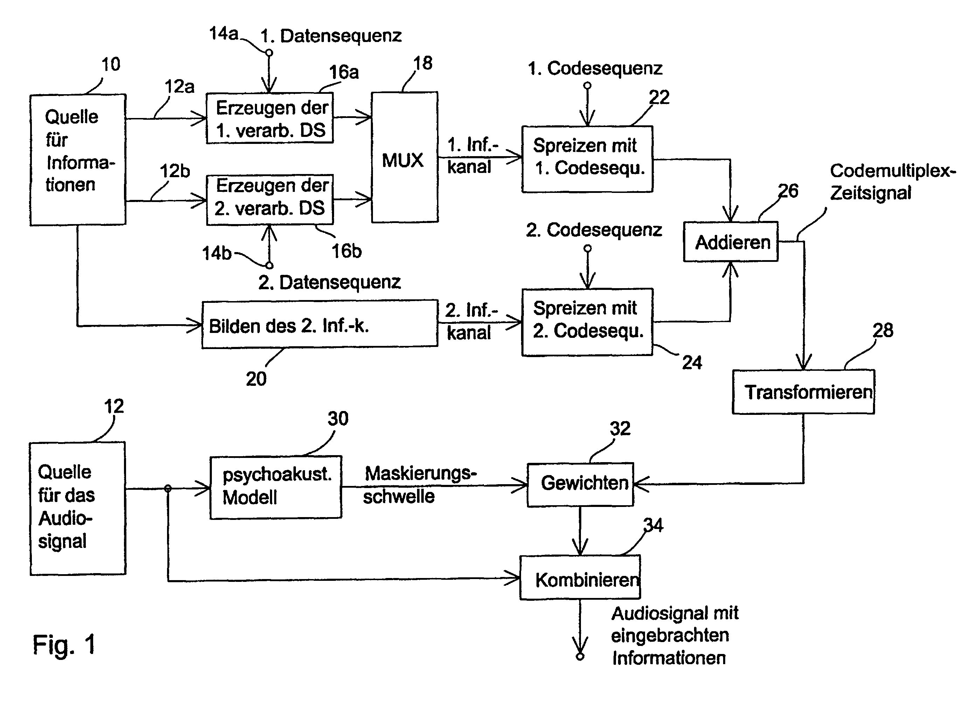

Fig. 1 zeigt ein Blockschaltbild für eine Vorrichtung bzw. ein Verfahren zum Einbringen von Informationen, die aus einer Quelle 10 für Informationen stammen, in ein Audiosignal, das aus einer Quelle 12 für das Audiosignal stammt. Zum Erzeugen 16a einer ersten verarbeiteten Datensequenz wird eine erste Datensequenz 14a mit einer ersten Informationseinheit 12a beaufschlagt. Analog dazu wird eine zweite Datensequenz 14b mit einer zweiten Informationseinheit 12b beaufschlagt, um eine zweite verarbeitete Datensequenz zu erzeugen (16b). Am Ausgang der Einrichtung 16a liegt somit eine erste verarbeitete Datensequenz vor, die als Informationsinhalt die erste Informationseinheit 12a trägt, und am Ausgang der Einheit 16b zum Erzeugen der zweiten verarbeiteten Datensequenz liegt die zweite verarbeitete Datensequenz vor, die die zweite Informationseinheit 12b trägt. Die beiden verarbeiteten Datensequenzen werden in einen Multiplexer 18 eingespeist, um einen Zeitmultiplex-Datenstrom zu erzeugen, der auch als erster Informationskanal bezeichnet wird. Die Einrichtungen 16a, 16b und 18 führen somit eine TDMA-Verarbeitung der ersten und zweiten Informationseinheit 12a, 12b durch, wobei der Datenstrom am Ausgang des Multiplexers 18, d. h. der Zeitmultiplex-Datenstrom, der den ersten Informationskanal bildet, Zeitschlitze aufweist, die von einem geeigneten Decodierer verwendet werden können, um die erste und die zweite Informationseinheit 12a, 12b wieder zu ermitteln.

Um weitere Informationseinheiten aus der Quelle 10 für Informationen in das Audiosignal einzubringen, ist eine Einrichtung 20 zum Bilden eines zweiten Informationskanals vorgesehen. Die Einrichtung 20 kann die gleichen Elemente aufweisen, wie sie zum Bilden des ersten Informationskanals vorgesehen sind. Aus Einfachheitsgründen wird es jedoch bevorzugt, daß zur Zeitschlitz-Verarbeitung des zweiten Informationskanals keine unterschiedlichen Datensequenzen verwendet werden, sondern nur eine einzige Datensequenz.

Der erste Informationskanal und der zweite Informationskanal werden unter Verwendung einer Einrichtung 22 bzw. 24 und eines Addierers 26 verarbeitet, um ein Codemultiplex-Zeitsignal am Ausgang des Addierers 26 zu erzeugen, das die Informationen sowohl des ersten Informationskanals als auch des zweiten Informationskanals im TDMA/CDMA-Format aufweist. Insbesondere wird der erste Informationskanal mit einer ersten Codesequenz gespreizt, um die Energie frequenzmäßig zu verteilen, z. B. über die gesamte zur Verfügung stehende Bandbreite. Analog dazu wird auch der zweite Informationskanal unter Verwendung einer zweiten Codesequenz mittels der Einrichtung 24 gespreizt, um auch seine Energie über z. B. das gesamte zur Verfügung stehende Band zu verteilen.

Das Codemultiplex-Zeitsignal am Ausgang des Addierers 26 wird anschließend einer Transformation vom Zeitbereich in den Frequenzbereich in einer Einrichtung 28 zum Tranformieren unterzogen, um eine spektrale Darstellung des Codemultiplex-Zeitsignals zu erzeugen.

Das Audiosignal aus der Quelle 12 für das Audiosignal wird in ein psychoakustisches Modell 30 eingespeist, um die Maskierungsschwelle zu berechnen. Die Maskierungsschwelle wird ebenso wie die spektrale Darstellung des Codemultiplex-Zeitsignals in eine Einrichtung 32 zum Gewichten der beiden Eingangssignale eingespeist. Die Einrichtung 32 zum Gewichten skaliert die Energie des in den Frequenzbereich transformierten Codemultiplex-Zeitsignals so, daß der Energieverlauf der Maskierungsschwelle entspricht bzw. um einen bestimmten Sicherheitsabstand kleiner als die maximal zulässige Energie ist. Es sei darauf hingewiesen, daß die Energie der ersten Informationseinheit 12a und der zweiten Informationseinheit 12b beliebig ist, da die Informationseinheiten durch Bits dargestellt sind, deren Amplitude frei wählbar ist. Daher ist auch die Energie der Spektraldarstellung am Ausgang der Einrichtung 28 beliebig aber von der Energie der ursprünglichen Ausgangssignale der Quelle 10 für Informationen abhängig. Erst durch die Einrichtung 32 zum Gewichten findet eine Skalierung der Energie statt, so daß die in das Audiosignal eingebrachten zusätzlichen Informationen von dem Audiosignal psychoakustisch maskiert werden.

Unter Verwendung einer Einrichtung 34 zum Kombinieren wird die skalierte spektrale Darstellung des Codemultiplex-Zeitsignals mit dem Audiosignal kombiniert, um als Ausgangssignal das Audiosignal mit den eingebrachten Informationen zu erhalten.

Erfindungsgemäß werden zum Erzeugen des ersten Informationskanal zwei unterschiedliche Datensequenzen verwendet. Insbesondere wird die erste Informationseinheit mit einer anderen Datensequenz beaufschlagt als die zweite Informationseinheit sowie unter Umständen weitere Informationseinheiten, die in den ersten Informationskanal eingebracht werden sollen. Aufgrund ihrer guten Korrelationseigenschaften werden für die erste Datensequenz und für die zweite Datensequenz Pseudo-Noise-Datensequenzen bevorzugt. Damit im Empfänger die erste Informationseinheit von der zweiten Informationseinheit unterschieden werden kann, und damit erfindungsgemäß eine Synchronisation auf die erste Informationseinheit im Decoder, d. h. in der Vorrichtung zum Ermitteln der in das Audiosignal eingebrachten Informationen erhalten werden kann. Um eine gute Trennung mittels eines Korrelators herzustellen, wird es ferner bevorzugt, daß die erste und die zweite Datensequenz orthogonal zueinander sind, da dann die Kreuzkorrelation beider Datensequenzen Null ist.

Das für die erste und die zweite Datensequenz Gesagte gilt im wesentlichen auch für die erste Codesequenz und die zweite Codesequenz. Es wird bevorzugt, daß sowohl die erste Codesequenz als auch die zweite Codesequenz aufgrund ihrer guten Korrelationseigenschaften Pseudo-Noise-Bitsequenzen sind, die zudem bevorzugterweise orthogonal sind, damit ihre Kreuzkorrelierte Null ist.

Übliche CD-Audiosignale liegen mit einer Abtastfrequenz von 44,1 kHz vor. Im Professional-Bereich werden dagegen 48 kHz verwendet. Um unnötige Dezimationen bzw. Interpolationen des Codemultiplex-Zeitsignals zu vermeiden, wird es bevorzugt, daß sowohl die erste Datensequenz als auch die zweite Datensequenz gleich lang sind, und daß sowohl die erste Codesequenz als auch die zweite Codesequenz gleich lang sind, und daß das Verhältnis der ersten Codesequenz zur ersten Datensequenz ferner so gewählt wird, daß auf jeden PCM-Abtastwert des Audiosignals ein Abtastwert des Zeitsignals, das die Informationen hat, die in das Audiosignal einzubringen sind, fällt. Dann kann das Kombinieren 34 einfach dadurch durchgeführt werden, daß beispielsweise die gewichtete spektrale Darstellung des Codemultiplex-Zeitsignals in den Zeitbereich transformiert wird und Abtastwert für Abtastwert mit dem Audiosignal addiert wird, um das Audiosignal mit dem Zeitsignal zu beaufschlagen, das die einzubringenden Informationen aufweist. Anders ausgedrückt ist dann das ursprüngliche Audiosignal eine Folge von PCM-Abtastwerten, während das Audiosignal mit eingebrachten Informationen ebenfalls eine Folge von PCM-Abtastwerten ist, die sich jedoch üblicherweise in relativ kleinem Maße von den PCM-Abtastwerten des "unbehandelten" Audiosignals unterscheiden.

Abhängig von der Beschaffenheit des binären Signals, das die Informationseinheiten darstellt, findet das Beaufschlagen der ersten und zweiten Datensequenz mit der ersten bzw. zweiten Informationseinheit statt. Liegen die Informationseinheiten als Bits vor, bei denen eine "Null" durch einen negativen Pegel dargestellt wird, und bei denen eine "Eins" durch einen positiven Pegel dargestellt wird, d. h. durch ein antipodisches Signal, so findet das Beaufschlagen einfach durch einen Multiplikator statt. Im Falle einer Eins entspricht die erste verarbeitete Datensequenz identisch der ersten Datensequenz. Im Falle einer "Null" ist die erste verarbeitete Datensequenz das Negative der ersten Datensequenz, d. h. die erste verarbeitete Datensequenz entspricht bis auf eine Phasendrehung von 180° der ersten Datensequenz.

Liegt das binäre Signal, das die erste und die zweite Informationseinheit darstellt, jedoch als Signal vor, bei dem eine "Eins" durch einen positiven Pegel dargestellt wird, und eine "Null" durch einen Null-Pegel dargestellt wird, so muß statt des Multiplikators eine XOR-Verknüpfung eingesetzt werden, um die erste bzw. zweite verarbeitete Datensequenz zu erzeugen. Dasselbe gilt auch für die Einrichtungen 22, 24 zum Spreizen der Informationskanäle. Liegen die Informationskanäle als antipodische Signale vor, so wird das Spreizen durch einen Multiplikator erreicht, der jedes Bit des Informationskanals mit der gesamten Codesequenz multipliziert. Liegt der Informationskanal dagegen als Signal mit Pegeln von Null und Eins vor, so muß eine XOR-Verknüpfung zwischen dem Informationskanal und der entsprechenden Codesequenz gewählt werden.

Für die nachfolgende Beschreibung wird von einem antipodischen Signal ausgegangen, d. h. ein binärer Wert von "Eins" wird durch einen positiven Pegel dargestellt, während ein binärer Wert von "Null" durch einen negativen Pegel dargestellt wird oder umgekehrt. Soll ein Bit freigehalten werden, d. h. als "Platzhalter" dienen, so kann einfach der Wert dieses Bits auf Null gesetzt werden. Im Falle eines nicht-antipodischen Signals könnte dies durch einen negativen Pegel erreicht werden. Antipodische Signale können jedoch leichter Platzhalter beinhalten, weshalb dieselben bevorzugt werden.

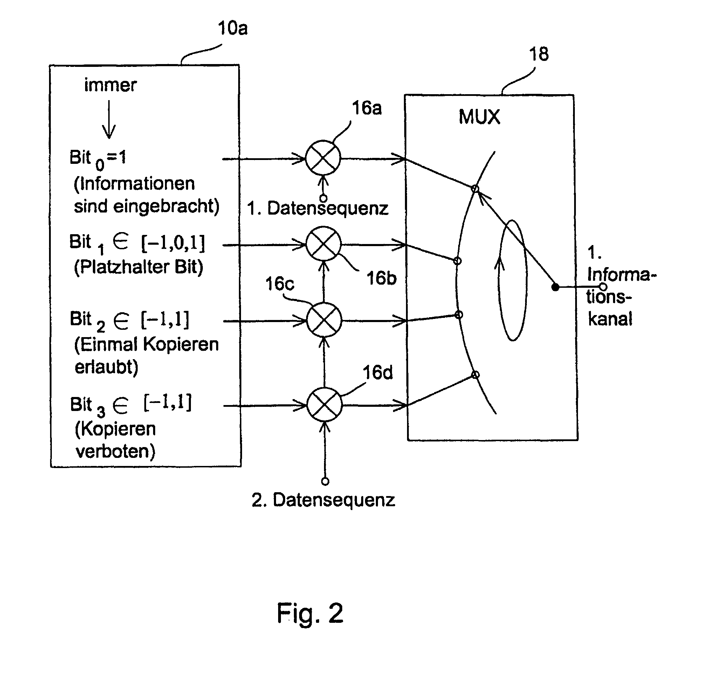

Fig. 2 zeigt eine detaillierte Darstellung der Quelle 10 für Informationen und der Einrichtungen 16a, 16b zum Erzeugen der verarbeiteten Datensequenzen sowie des Multiplexers 18, der als Ausgangssignal ein Zeitmultiplex-Datensignal liefert, das den ersten Informationskanal bildet. Zur Veranschauiichung ist die Quelle für Informationen in Fig. 2 lediglich als Quelle 10a für Informationen für den ersten Informationskanal dargestellt. Gemäß einem bevorzugten Ausführungsbeispiel der vorliegenden Erfindung enthält der erste Informationskanal vier Bits, d. h. Bit0, Bit1 Bit2 und Bit3. Per Definition wird es bevorzugt, Bit0, das die erste Informationseinheit darstellt, immer gleich 1 zu setzen. Dieses Bit gibt einem Decodierer die Information, daß überhaupt eine Einbringung von Informationen stattgefunden hat, d. h. daß das Audiosignal ein Wasserzeichen trägt. Bit1 wird als Platzhalter-Bit verwendet, um mit demselben das später beschriebene Remarking-Verfahren bewerkstelligen zu können. Bit1 kann somit den Pegel -1 für einen ersten logischen Zustand und +1 für einen zweiten logischen Zustand sowie 0 im Falle eines Platzhalters einnehmen. Bit2 trägt gemäß einem bevorzugten Ausführungsbeispiel der vorliegenden Erfindung die Information, daß ein einmaliges Kopieren des Audiosignals erlaubt ist. Es kann Pegel von -1 oder +1 haben. Bit3 schließlich bedeutet, wenn es gesetzt ist, daß ein Kopieren des Stücks generell verboten ist. Falls einem Benutzer ein einmaliges Kopieren erlaubt ist, ist Bit3 nicht gesetzt, d. h. es hat einen Wert von -1, während Bit2 gesetzt ist, d. h. es hat einen Wert von 1. Ist dagegen Bit3 gesetzt, so ist der Wert von Bit2 unerheblich. Ist dagegen Bit2 gesetzt, d. h. einmal kopieren ist erlaubt, so wird Bit3 nicht gesetzt sein.

Bit0 wird, wie es bereits bezugnehmend auf Fig. 1 dargestellt worden ist, mit der ersten Datensequenz unter Verwendung des Multiplizieres 16a multipliziert, um eine zeitliche Spreizung desselben zu erreichen. Am Ausgang des Muitiplizieres 16a liegt eine verarbeitete erste Datensequenz vor, die eine Mehrzahl von Bits aufweist, die alle den Informationsgehalt von Bit0 tragen. Dasselbe gilt für Bit1, das hier bevorzugterweise als Platzhalterbit dient und die zweite Informationseinheit darstellt. Alternativ könnten auch die Bits 2 oder 3 die zweite Informationseinheit im Sinne von Fig. 1 sein. Bei dem in Fig. 2 dargestellten Ausführungsbeispiel der vorliegenden Erfindung werden vier TDMA-Zeitschlitze bzw. "Zeitkanäle" verwendet, weswegen vier Einrichtungen zum Beaufschlagen mit Datensequenzen 16a-16d vorgesehen sind. Die Datensequenz, die in den ersten Multiplizierer 16a eingespeist wird, unterscheidet sich jedoch von der Datensequenz, die in die anderen Multiplizierer 16b-16d eingespeist werden. Dies erlaubt es, daß Bit0, d. h. die erste Informationseinheit, immer von den anderen Informationseinheiten unterschieden werden kann.

Aufgrund der ersten Datensequenz, die zum Spreizen von Bit0 verwendet wird, wird Bit0 als Synchronisationswort verwendet.Im Sinne einer effizienten Übertragung wird Bit0 jedoch ebenfalls als Datenträger eingesetzt, nämlich als Signalisierung, daß überhaupt ein Wasserzeichen in dem betrachteten Audiosignal vorliegt. Bit0 erfüllt somit eine Doppelfunktion und führt insbesondere dazu, daß für den zweiten Informationskanal keinerlei Synchronisationswörter mehr benötigt werden, wodurch der zweite Informationskanal voll und ganz zur Nutzdatenübertragung eingesetzt werden kann. Dieser Vorteil wird besonders daraus ersichtlich, daß sämtliche Informationen ja unter die Maskierungsschwelle versteckt werden müssen. So kann es sein, daß nicht besonders viel Energie verbleibt, um Daten einzubringen. Dies wird der Fall sein, wenn das Audiosignal sehr tonal ist. Dann werden die Daten zwar in das Audiosignal eingebracht, ihre Energie ist jedoch derart gering, daß das vorliegende Signal/Rausch-Verhältnis nicht mehr zu einem sicheren Decodieren ausreicht. Die in das Audiosignal eingebrachten Informationseinheiten, d. h. Bit0 bis Bit3, werden jedoch zyklisch ständig in das Musikstück eincodiert, so daß zumindest die Hoffnung besteht, in jedem zweiten, dritten bzw. z. B. zehnten Zyklus die Kopierinformationen sicher decodieren zu können. Es wird bevorzugt, daß die Kopierinformationen möglichst durchgehend während des Stücks decodierbar sind, damit auch während des gesamten Stückes ein wirksamer Urheberrechtsschutz vorgesehen werden kann.

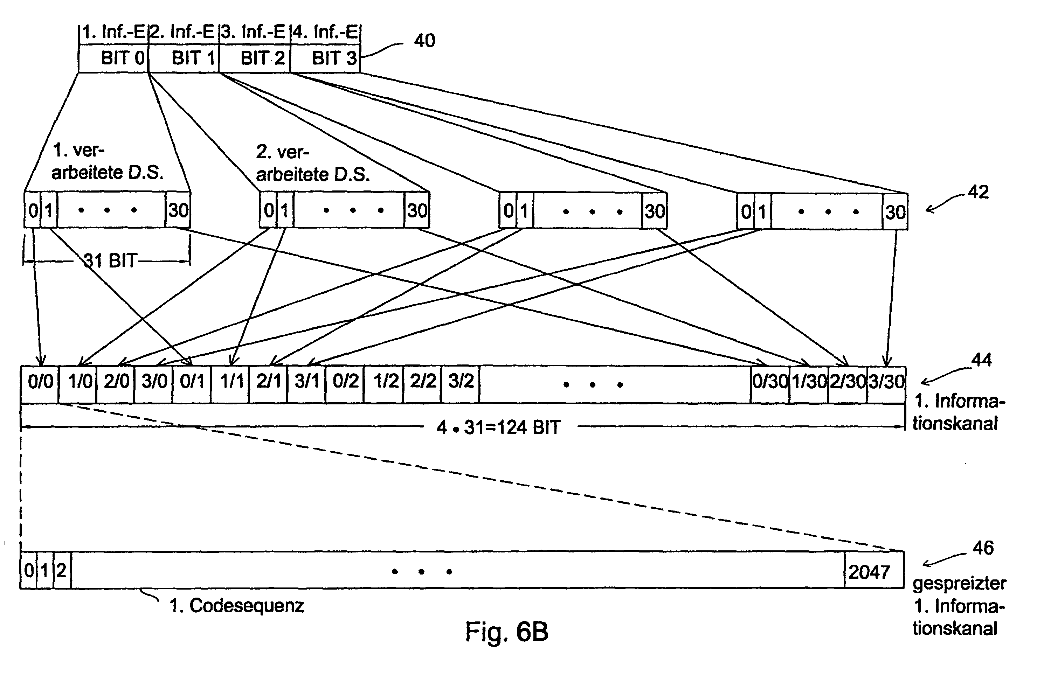

Gemäß einem bevorzugten Ausführungsbeispiel der vorliegenden Erfindung ist ein Multiplexer 18 ein bitweiser Multiplexer, der immer nach einem Bit den nächsten Eingang mit seinem Ausgang verbindet. Dies führt zu einem ersten Informationskanal, der eine verschachtelte, d. h. "interleaved" Anordnung der Ausgangssignale der Multiplizierer 16a-16d darstellt. Dies wird bezugnehmend auf Fig. 6B detaillierter erläutert.

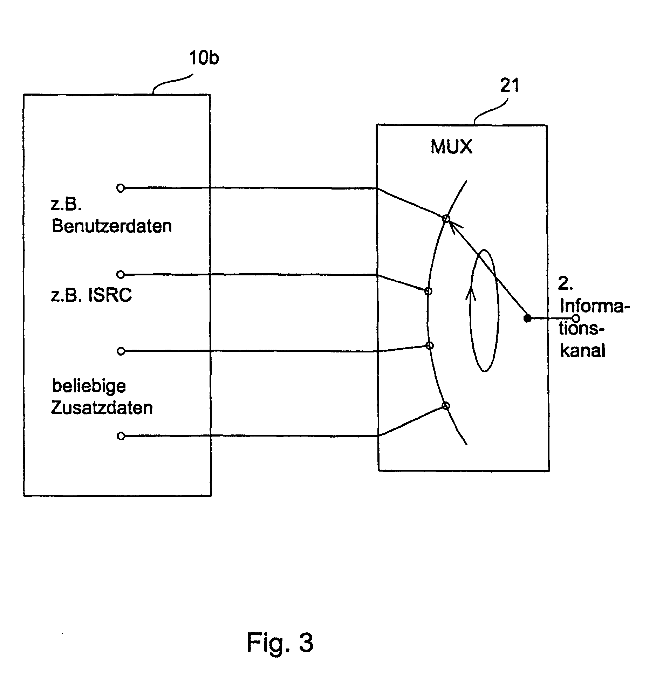

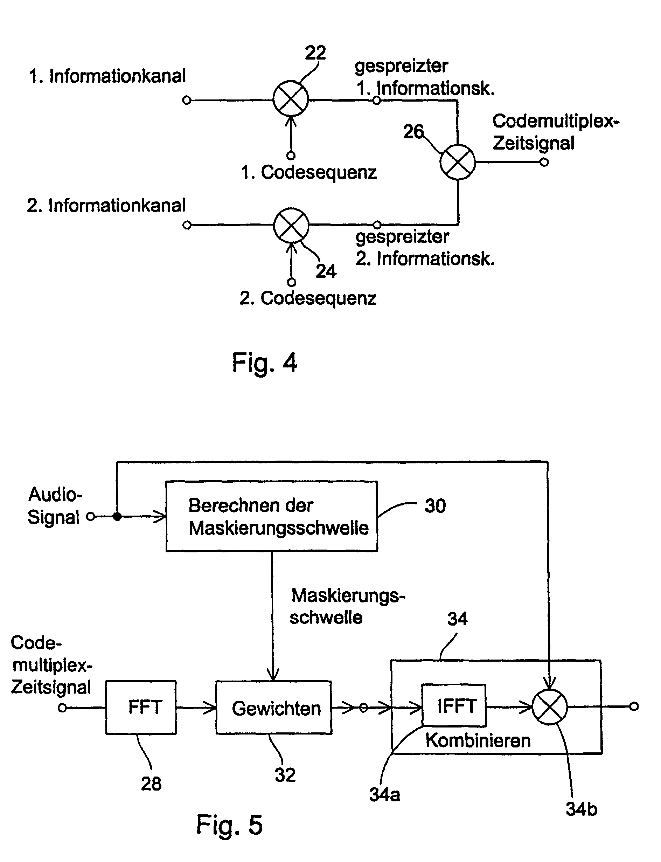

Fig. 3 zeigt das analoge Szenario für den zweiten Informationskanal, der beispielsweise Daten über den autorisierten Benutzer des Musikstücks, den ISRC oder allgemein beliebige Zusatzdaten aufweisen kann. Gemäß einem bevorzugten Ausführungsbeispiel der vorliegenden Erfindung wird bei dem zweiten Informationskanal eine vierkanalige Zeitmultiplex-Verarbeitung bevorzugt, derart, daß die Einrichtung 20 (Fig. 1) einen zum Multiplexer 18 ähnlichen Multiplexer 21 umfaßt, der ebenfalls eine bitweise Verschachtelung der einzelnen Kanäle durchführt. Es ist jedoch zu sehen, daß zur Erhöhung der Datenrate im zweiten Informationskanal keine Multiplikation der Daten mit einer ersten bzw. zweiten Datensequenz durchgeführt wird. Stattdessen wird der zweite Informationskanal ohne eine derartige Spreizung mit Daten bedient. Wie es bereits erwähnt worden ist, führt die Spreizung mit der ersten Datensequenz bzw. der zweiten Datensequenz dazu, daß der Informationsgehalt der Bits 0 bis 3 entsprechend der Länge der ersten bzw. zweiten Datensequenz mehrmals übertragen werden, während im Vergleich dazu die Informationen im zweiten Informationskanal ohne eine solche Spreizung dem Multiplexer 21 zugeführt werden. Der erste Informationskanal weist daher eine wesentlich höhere Fehlersicherheit gegenüber dem zweiten Informationskanal auf. Im zweiten Informationskanal können dafür wesentlich mehr Nutzdaten als im ersten Informationskanal übertragen werden. Da jedoch eine zyklische Übertragung stattfindet und ferner eine Spreizung über der Frequenz wie es bezugnehmend auf Fig. 4 erläutert wird, stattfindet, kann dennoch davon ausgegangen werden, daß mit guter Wahrscheinlichkeit auch die Daten des zweiten Informationskanals bei der überwiegenden Anzahl von Musikstücken sicher decodiert werden kann. Die Kopierschutzinformationen werden daher möglichst fehlersicher über den ersten Informationskanal übertragen, während zusätzliche Informationen weniger sicher, jedoch mit höherer Datenrate über den zweiten Informationskanal übertragen werden.

Die Spreizung des ersten Informationskanals und des zweiten Informationskanals wird im Falle der Verwendung von antipodischen Signalen mittels zweier Multiplizierer 22 bzw. 24 (Fig. 4) durchgeführt, um den gespreizten ersten Informationskanal und den gespreizten zweiten Informationskanal zu erhalten. Beide Informationskanäle werden Bit für Bit addiert, wodurch ein Codemultiplex-Zeitsignal geschaffen wird, das beide Informationskanäle umfaßt. Die Addition der beiden Kanäle hat ferner den zusätzlichen Nebeneffekt, daß die beiden Kanäle immer voll und ganz aufeinander sychronisiert sind, wodurch der zweite Informationskanal unter Verwendung der ersten Informationseinheit des ersten Informationskanals synchronisiert werden kann. Damit steht der zweite Informationskanal voll und ganz zur Nutzdatenübertragung zur Verfügung.

Wie es in Fig. 5 gezeigt ist, wird das Codemultiplex-Zeitsignal anschließend einer vorzugsweise in Form einer schnellen Fouriertransformation (FFT) implementierten Frequenztransformation unterzogen, um die spektrale Darstellung zu erzeugen, die mit der durch die Einrichtung 30 zum Berechnen der psychoakustischen Maskierungsschwelle berechneten Maskierungsschwelle gewichtet wird. Am Ausgang der Einrichtung 32 liegt eine gewichtete spektrale Darstellung des Codemultiplex-zeitsignals vor, die die Information des ursprünglichen Codemultiplex-Zeitsignals trägt, deren Energie jedoch durchgehend kleiner oder gleich der psychoakustischen Maskierungsschwelle ist. Das Ausgangssignal der Einrichtung 32 sowie das Audiosignal werden dann in der Einrichtung 34 zum Kombinieren kombiniert. Da das Ausgangssignal der Einrichtung 32 im Frequenzbereich vorliegt, kann eine Umsetzung der Spektraldarstellung in eine zeitliche Darstellung mittels einer inversen schnellen Fouriertransformation 34a durchgeführt werden und eine anschließende abtastwertweise Addition 34b unter Verwendung eines einfachen Addierers. Alternativ kann das Audiosignal in den Frequenzbereich transformiert werden und mit dem Ausgangssignal der Einrichtung 32 direkt addiert werden, um anschließend wieder in den Zeitbereich transformiert zu werden. Diese Möglichkeiten sind prinzipiell als gleichwertig anzusehen. Am Ausgang der Einrichtung 34 zum Kombinieren liegt somit das Audiosignal mit eingebrachten Informationen vor.

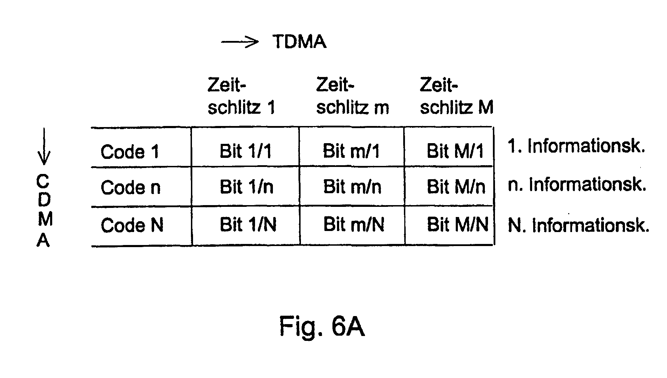

Fig. 6A zeigt einen prinzipiellen Überblick über die Kombination der TDMA-Technik und der CDMA-Technik. Fig. 6A soll zudem die Flexibilität der vorliegenden Erfindung darstellen. Prinzipiell ist eine beliebige Anzahl N von CDMA-Kanälen möglich. Hierzu würden dann für jeden der N Kanäle eine Vorrichtung wie in Fig. 3 gezeigt vorgesehen werden, sowie eine entsprechende Anzahl von Einrichtungen zum Spreizen der weiteren Informationskanäle mit entsprechenden weiteren Codesequenzen. Für eine Anzahl N von CDMA-Kanälen, d. h. Informationskanälen, wird somit eine gleiche Anzahl von zueinander vorzugsweise orthogonalen Codesequenzen benötigt.

Fig. 6A zeigt zudem den TDMA-Aspekt der vorliegenden Erfindung, der durch die in Fig. 2 dargestellte Kombination aus Multiplizierern 16a-16d und Multiplexer 18 implementiert wird. Bei dem in Fig. 2 gezeigten Beispiel ist die Anzahl M gleich 4, d. h. es sind vier Zeitschlitze beschrieben. Da die Länge der Zeitschlitze a priori bekannt ist, können weitere Zeitschlitze ebenfalls mit der zweiten Datensequenz gespreizt werden. Der Synchronisationsvorteil gemäß der vorliegenden Erfindung wird für zunehmende Anzahlen von Zeitschlitzen sowie insbesondere Informationskanälen immer größer. Für den zweiten und jeden weiteren Informationskanal werden keinerlei Synchronisationspräambeln oder ähnliches benötigt. Sämtliche Kanäle können unter Verwendung der ersten Informationseinheit synchronisiert werden.

Im nachfolgenden wird auf Fig. 6B Bezug genommen, die das Bitformat gemäß der vorliegenden Erfindung darstellt. In der Zeile ganz oben in Fig. 6B sind die vier Bits, d. h. Bit0, Bit1, Bit2 und Bit3, dargestellt, die die erste Informationseinheit, die zweite Informationseinheit, die dritte Informationseinheit bzw. die vierte Informationseinheit darstellen (40). In der zweiten Zeile 42 ist das Bitformat vor dem Multiplexer 18 dargestellt. Bei dem in Fig. 6B betrachteten Ausführungsbeispiel der vorliegenden Erfindung betragen die Längen der ersten und der zweiten Datensequenz jeweils 31 Bit. Beide Datensequenzen erstrecken sich somit von einem Bit0 zu einem Bit30. Die Einrichtungen 16a, 16b zum Erzeugen der ersten bzw. zweiten verarbeiteten Datensequenz führen somit zu einer 31-fachen Spreizung der Informationseinheiten Nummer 1 bis Nummer 4.

Wie es bereits dargestellt worden ist, führt der Multiplexer 18 gemäß einem bevorzugten Ausführungsbeispiel der vorliegenden Erfindung nicht nur ein einfaches Multiplexen der verarbeiteten Datensequenzen durch, sondern auch gleichzeitig vorzugsweise ohne zusätzliche Elemente eine Verschachtelungsoperation. Dies ist durch die Pfeile zwischen der Zeile 42 und einer Zeile 44 dargestellt. Die Bits mit der Nummer 0 der Zeile 42 werden alle an die ersten vier Positionen der Zeile 44 geschrieben. Die Bits mit der Nummer 1 werden analog an die zweiten vier Positionen der Zeile 44 geschrieben. Dies wird fortgesetzt bis zu den Bits mit der Nummer 30, die an die letzten vier Positionen der Zeile 44, die den ersten Informationskanal darstellt, geschrieben werden. Die Länge des ersten Informationskanals beträgt nun 4 x 31 = 124 Bit. Aufgrund der ersten und der zweiten Datensequenz wurde die Bitrate des ersten Informationskanals um das 31-fache reduziert.

Die Spreizung des ersten Informationskanals mit der ersten Codesequenz, die bei dem hier betrachteten Ausführungsbeispiel der vorliegenden Erfindung eine Länge von 2048 "Chips" hat, ist in der letzten Zeile 46 in Fig. 6B dargestellt. Ein Chip ist, wie es im Bereich der Spreizbandtechnik bekannt ist, eine Einheit einer Spreizsequenz. Die Länge eines Chips ist allgemein frei wählbar. Für die vorliegende Erfindung wird es jedoch bevorzugt, daß die Länge eines Chips der Länge eines Audioabtastwerts entspricht, damit eine abtastwertweise Zuordnung zwischen dem Audiosignal und dem gewichteten Codemulitplex-Zeitsignal ohne dazwischenliegende Abtastumwandler etc. möglich ist.

Die Länge des ersten Informationskanals beträgt somit nach einer Spreizung sämtlicher Bits der Zeile 44 124 x 2048 253.952 Abtastwerte. Die Datenratenreduktion von der Zeile 40 bis zur Zeile 46 bezogen auf ein Bit entspricht dem Produkt der Längen der Datensequenz und der Codesequenz und umfaßt beim vorliegenden Beispiel eine Reduktion um das 63488-fache. Durch die Reduktion der Datenrate wird ein sogenannter Codiergewinn erreicht, der sich unmittelbar auf das Signal/Rausch-Verhältnis im Decodierer auswirkt. Der hohe erreichte Codiergewinn trägt dazu bei, daß die Informationen trotz ihrer geringen Energie, die unterhalb der Maskierungsschwelle liegen muß, sicher decodiert werden können.

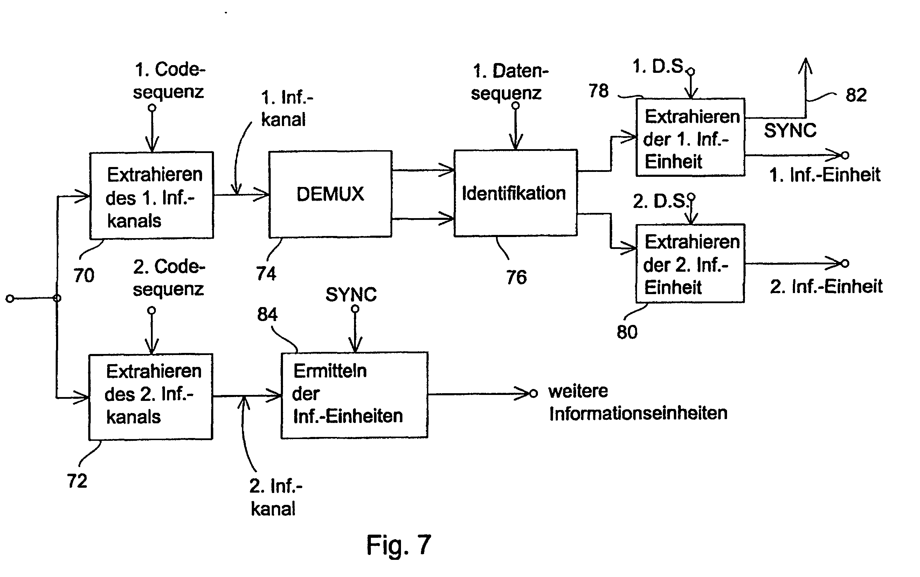

Im nachfolgenden wird auf ein Verfahren und eine Vorrichtung zum Ermitteln der in das Audiosignal eingebrachten Informationen beschrieben. Fig. 7 zeigt ein Übersichtsdiagramm. Das Audiosignal samt den eingebrachten Informationen wird in eine Einrichtung 70 zum Extrahieren des ersten Informationskanals und in eine Einrichtung 72 zum Extrahieren des zweiten Informationskanals eingespeist. Die beiden Einrichtungen 70 und 72 sollen die durch die Einrichtungen 22, 24 (Fig. 1) eingeführte Spreizung wieder rückgängig machen. Die Einrichtung 70 wird dabei mit der ersten Codesequenz gespeist, während die Einrichtung 72 mit der zweiten Codesequenz gespeist wird. An den Ausgängen der Einrichtungen 70 und 72 liegen dann der erste Informationskanal und der zweite Informationskanal vor.

Im Falle einer Verschachtelung der verarbeiteten Datensequenzen, wie sie in Fig. 6B dargestellt ist und durch den bitweise umschaltenden Multiplexer 18 (Fig. 2) bewirkt wird, wird der erste Informationskanal in einen Demultiplexer 74 eingespeist, um im allgemeinen Fall mindestens zwei Datenströme zu erzeugen, von denen jedoch noch nicht bekannt ist, welcher der erste verarbeitete Datenstrom ist, und welcher der zweite verarbeitete Datenstrom ist.

Die Identifikation der beiden Datenströme am Ausgang des Demultiplexers 74 wird mittels einer Einrichtung 76 zur Identifikation der Datenströme erreicht. Hierzu werden beide Datenströme einer Korrelation mit der ersten Datensequenz unterzogen. Nur der Datenstrom, der unter Verwendung der ersten Datensequenz erzeugt worden ist, wird signifikante Ausgangsspitzen bei einer derartigen Korrelation erzeugen. Der andere Datenstrom wird aufgrund der möglichst orthogonalen Eigenschaften der ersten und der zweiten Datensequenz lediglich nicht bedeutsame Spitzen in der Korrelation mit der ersten Datensequenz ergeben.

Falls jedoch keine Verschachtelung der verarbeiteten Datensequenzen durchgeführt wird, würden in Zeile 44 von Fig. 6B immer 31 Bits entsprechend den verarbeiteten Datensequenzen hintereinander stehen. In diesem Fall muß kein Demultiplex durchgeführt werden. Stattdessen wird zur Feststellung der ersten verarbeiteten Datensequenz der erste Informationskanal einer Korrelation mit der ersten Datensequenz unterzogen. Tritt eine Spitze auf, so weiß man, daß dort die verarbeitete erste Datensequenz ist, und daß dann die verarbeitete zweite Datensequenz und nacheinander eventuelle weitere verarbeitete zweite Datensequenzen folgen. Der Einrichtung zum Feststellen könnte dann ein Demultiplexer nachgeschaltet sein, der abhängig von der Korrelationsspitze startet und immer nach 31 Bits umschaltet. Wie es jedoch bereits ausgeführt worden ist, umfaßt ein bevorzugtes Ausführungsbeispiel der vorliegenden Erfindung das Verschachteln, um weitere Übertragungssicherheit gegenüber kurzen zeitlichen "Störungen", d. h. Bereichen mit niedriger Maskierungsschwelle, zu erhalten.

Bei einem bevorzugten Ausführungsbeispiel der vorliegenden Erfindung werden im Schritt des Feststellens und im Schritt des Extrahierens der ersten Informationseinheit nicht nur eine einzige sondern voneinander unabhängige Korrelationen mit der ersten Datensequenz berechnet. Dies hat den Vorteil, daß während des Extrahierens dauernd überprüft werden kann, ob die verarbeitete Datensequenz, die für die erste verarbeitete Datensequenz gehalten wird, auch tatsächlich die verarbeitete erste Datensequenz ist. Damit kann ein Angriff, um das Wasserzeichen unlesbar zu machen, indem genau 2048 Abtastwerte des Audiosignals entfernt werden, abgewehrt werden.

Alternativ kann jedoch auf Kosten der Sicherheit gegenüber Angriffen, um Rechenzeit zu sparen, die Korrelation im Schritt des Feststellens nur ein einziges Mal durchgeführt werden, um dadurch die Datensequenzen für das gesamte Audiosignal festzulegen, d. h. den Demultiplexer zu initialisieren. Selbstverständlich könnte eine derartige Initialisierung des Demultiplexers auch zu bestimmten Zeitpunkten im Audiosignal, z. B. alle fünf Minuten oder immer zu Beginn eines neuen Stücks etc. durchgeführt werden.

Nachdem die beiden Datenströme in der Einrichtung 76 identifiziert worden sind, wird die erste Informationseinheit in einer Einrichtung 78 extrahiert, während die zweite Informationseinheit in einer Einrichtung 80 extrahiert wird. Dazu wird die Einrichtung 78 mit der ersten Datensequenz gespeist und korreliert, wie es in der Technik bekannt ist. Analog dazu wird die Einrichtung 80 mit der zweiten Datensequenz gespeist, um schließlich ausgangsseitig die erste Informationseinheit und die zweite Informationseinheit auszugeben. Ein Vorteil gemäß der vorliegenden Erfindung besteht darin, daß die Ausgabe der Einrichtung 78 zum Extrahieren der ersten Informationseinheit ebenfalls als Synchronisationssignal für die Ermittlung der Informationseinheiten, die in dem zweiten Informationskanal codiert sind, verwendet wird. Dies ist in Fig. 7 durch einen Synchronisationsausgang 82 dargestellt.

Das Synchronisationssignal an dem Ausgang 82 wird in eine Einrichtung 84 zum Ermitteln der Informationseinheiten des zweiten Informationskanals eingespeist, die mit dem Ausgang der Einrichtung 72 zum Extrahieren des zweiten Informationskanals aus dem mit Informationen versehenen Audiosignal verbunden ist. Aufgrund des Synchronisationssignals von dem ersten Informationskanal weiß die Einrichtung 84 zum Ermitteln der Informationseinheiten aus dem zweiten Informationskanal, wann ein neuer Zyklus im zweiten Informationskanal beginnt. Dies erlaubt eine korrekte Zuordnung der Bits zu ihrer Bedeutung, d. h. daß beispielsweise eine erste Anzahl von Bits den ISRC codiert, während die daran anschließende Anzahl von Bits den Benutzer identifiziert, usw.

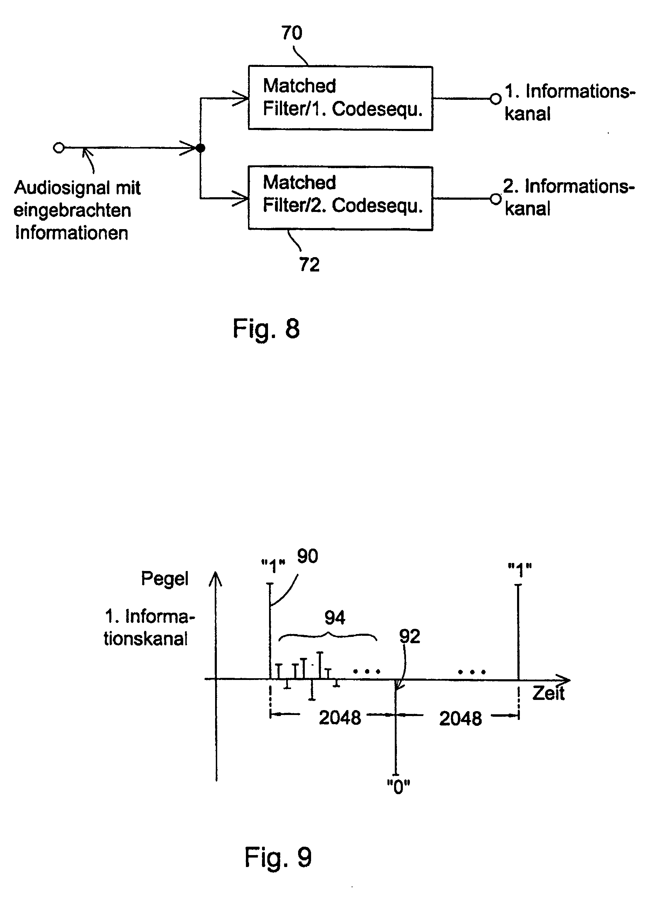

In Fig. 8 wird detaillierter auf den Eingangsabschnitt der in Fig. 7 gezeigten Vorrichtung eingegangen. Das Audiosignal wird in die Einrichtungen 70 und 72 eingespeist. Die Einrichtung 70 ist vorzugsweise als sogenanntes Matched-Filter ebenso wie die Einrichtung 72 implementiert, wobei das Matched-Filter zum Extrahieren des ersten Informationskanals eine Korrelation des Audiosignals mit der ersten Codesequenz durchführt, während das Matched-Filter eine Korrelation des Audiosignals mit der zweiten Codesequenz durchführt, um ausgangsseitig sowohl den ersten Informationskanal als auch den zweiten Informationskanal zu erzeugen.

Im nachfolgenden wird auf Fig. 9 Bezug genommen, das zur Verbesserung des Verständnisses eine schematische Darstellung des zeitlichen Ausgangssignals des Matched-Filters 70, d. h. des ersten Informationskanals darstellt. Ergibt die Korrelation, die durch das Filter 70 durchgeführt wird, eine Übereinstimmung zwischen der ersten Codesequenz und den empfangenen Audiodaten, so wird das Filter 70 einen hohen Pegel 90 ausgeben. War der Ausschnitt des Audiodatenstroms gleichphasig zu der ersten Codesequenz, so ergibt sich eine positive Spitze 90. Ist der Ausschnitt des Bitstroms dagegen gegenphasig zu der ersten Codesequenz, so ergibt sich eine negative Spitze, die beispielhaft durch das Bezugszeichen 92 bezeichnet ist. Zwischen den Spitzen 90 und 92 wird das Filter ebenfalls Ausgangssignale 94 liefern, die bezüglich ihrer Amplitude jedoch stark gegenüber den Spitzen 90 und 92 zurücktreten werden.

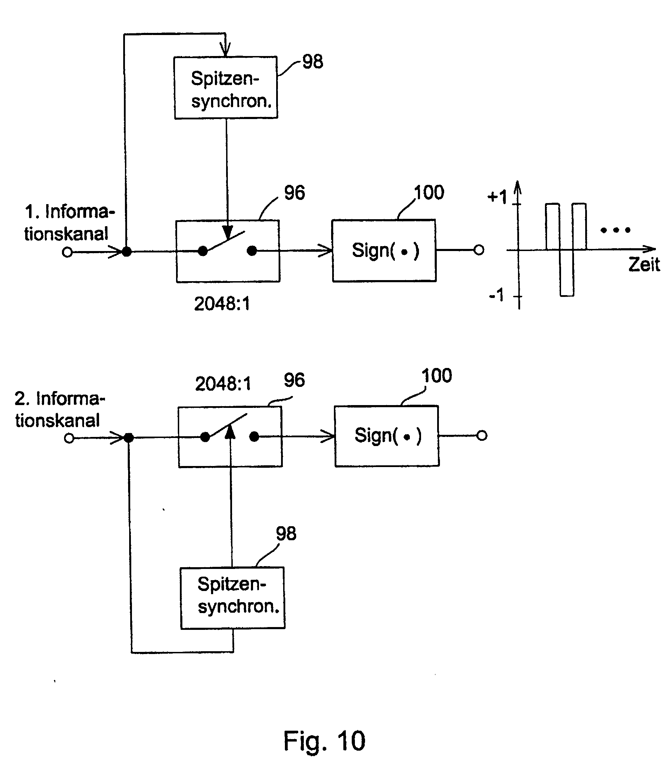

Im nachfolgenden wird auf Fig. 10 Bezug genommen, die eine beispielhafte Schaltung zeigt, um aus dem in Fig. 9 dargestellten Zeitsignal ein binäres Signal zu erzeugen, wie es ganz rechts in Fig. 10 schematisch dargestellt ist. Hierzu wird beispielsweise das Ausgangssignal des Filters 70 in einen Schalter 96 eingespeist, der auch als Dezimierer im Verhältnis 2048:1 aufgefaßt werden kann. Wird in einem Spitzensynchronisationsblock 98 erfaßt, daß das aktuell anliegende Signal eine Schwelle überschreitet, so wird der Schalter kurzgeschlossen, und das aktuell anliegende Signal wird von dem Schalter 96 durchgeschaltet. Ist dagegen das Eingangssignal in die Spitzensynchronisationsschaltung 98 geringer als eine Schwelle, so bleibt der Schalter getrennt, und es wird nichts durchgeschaltet. Wenn Fig. 9 betrachtet wird, so wird der Schalter 96 alle 2048 Taktperioden durchgeschaltet. Ein Vorzeichenbestimmungsblock 100 mißt das Vorzeichen des Pulses und erzeugt ein positives Ausgangssignal mit einer beliebig wählbaren Amplitude im Falle einer positiven Spitze 90 (Fig. 9) oder ein negatives Ausgangssignal mit einer beliebigen Amplitude im Falle einer negativen Spitze 92 (Fig. 9). An dieser Stelle sei angemerkt, daß durch die Vorzeichenbildung des Blocks 100 wieder eine Unabhängigkeit von der Signalamplitude im Audiosignal erreicht wird. Das Ausgangssignal, das ganz rechts in Fig. 7 symbolisch dargestellt ist, hat eine Amplitude, die durch den Block 100 festgelegt ist und mit der Amplitude der in das Audiosignal eingebrachten Signale nichts mehr zu tun hat. Die bezüglich des ersten Informationskanals beschriebene Schaltung kann ohne weiteres auch für die Dezimierung und Impulsformung des zweiten Informationskanals eingesetzt werden, wie es in Fig. 10 dargestellt ist.

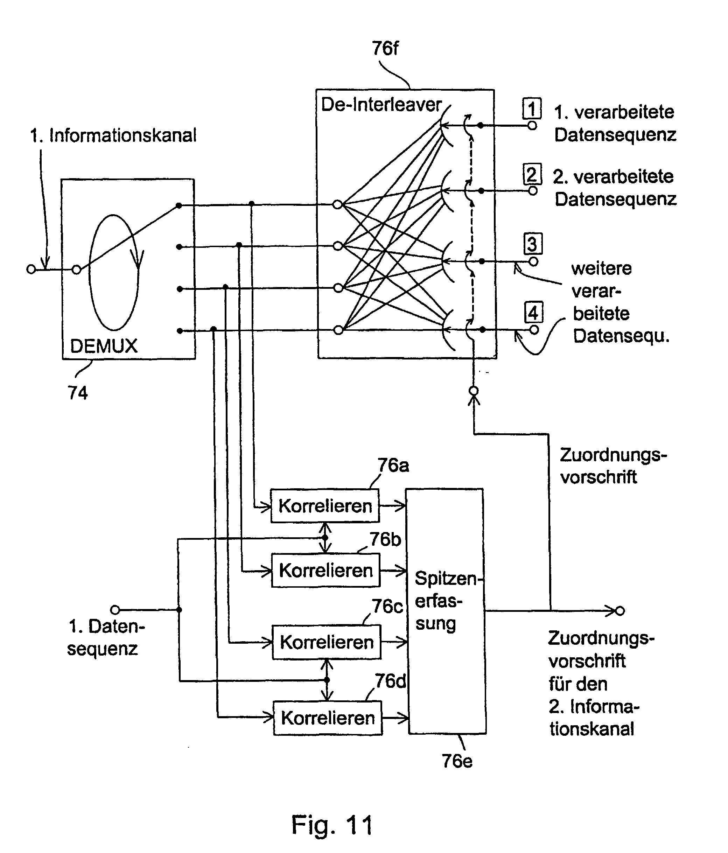

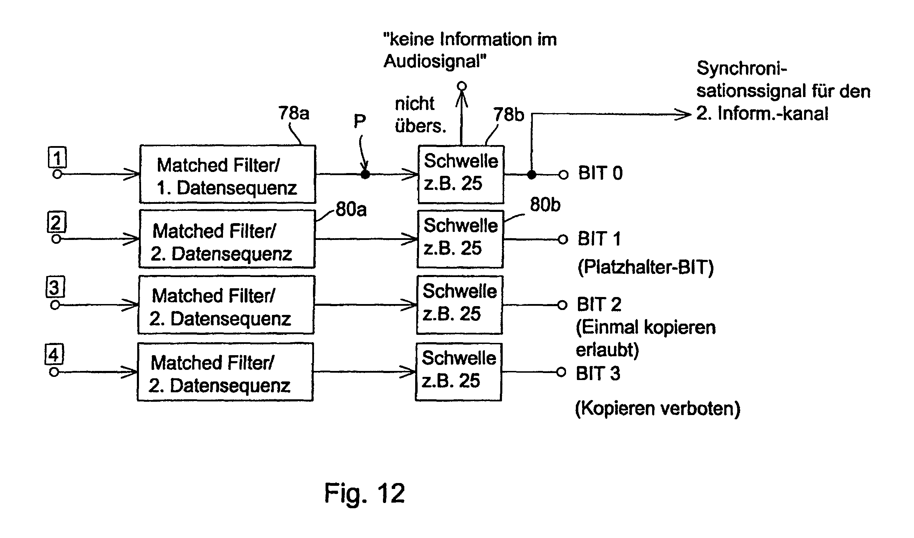

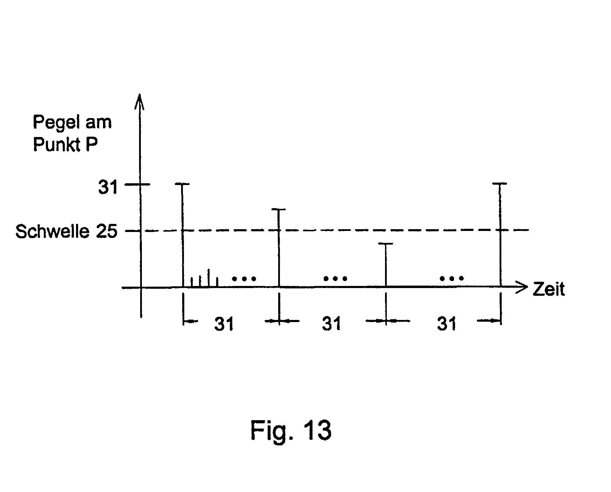

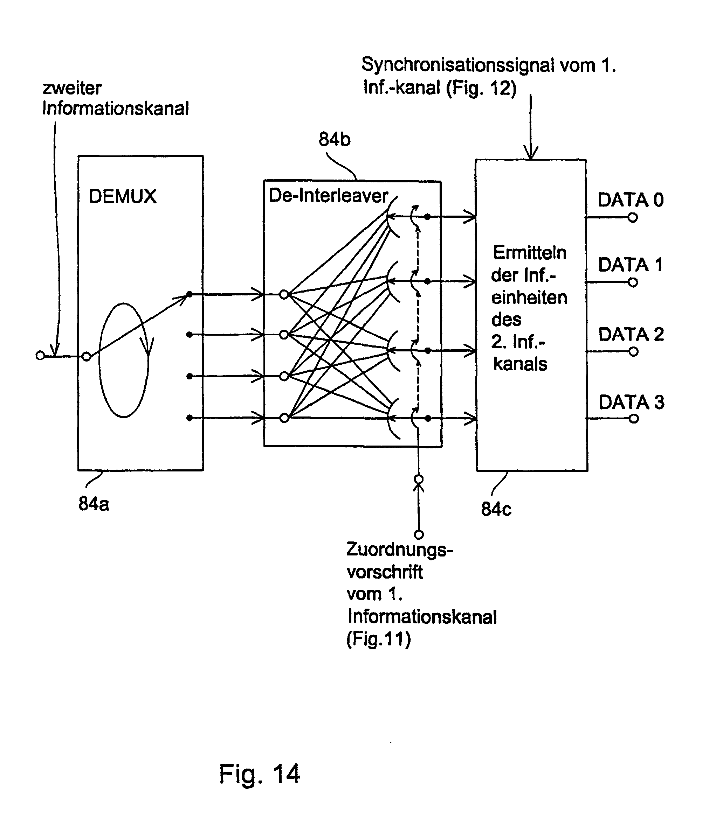

In Fig. 11 ist eine detailliertere Darstellung der Einrichtung 76 zum Identifizieren der von dem Demultiplexer 74 ausgegebenen Datenströme dargestellt. Es sei darauf hingewiesen, daß das in Fig. 11 dargestellte Decodiererbeispiel zu dem in Fig. 2 dargestellten Codiererbeispiel analog ist und ebenfalls dem in Fig. 6B dargestellten Bitformat entspricht. Bei dem hier dargestellten Ausführungsbeispiel wurden vier "zeitliche" Kanäle oder Zeitschlitze demultiplext, um den ersten Informationskanal 44 zu erzeugen. Der Demultiplexer 74 führt nun in Analogie zu dem Multiplexer 18 eine Demultiplexoperation durch, derart, daß immer ein Bit in einen Ausgang gegeben wird, und das nächste Bit in den nächsten Ausgang gegeben wird, usw. Alle vier Ausgänge des Demultiplexers 74 werden durchgehend einer Korrelation durch die Korrelatoren 76a-76d unterzogen. Die Korrelatoren 76a-76d werden alle mit der ersten Datensequenz gespeist. Das heißt, daß nur der Korrelator, der die erste verarbeitete Datensequenz erhält, ein markantes Ausgangssignal erzeugen wird, während die anderen Korrelatoren kein markantes Ausgangssignal erzeugen werden, da die Kreuzkorrelation zwischen der ersten Datensequenz und der zweiten Datensequenz aufgrund der bevorzugten Orthogonalität zwischen den beiden Datensequenzen sehr kleine Werte annehmen wird. In einem Block 76e zur Spitzenerfassung, d. h. zur Erfassung, welcher Korrelator Spitzen ausgibt, werden die Ausgangssignale der vier Korrelatoren 76a-76d in die Einrichtung 76e eingespeist, die ebenfalls wieder vorzugsweise unter Verwendung einer Schwellwertentscheidung den Korrelator identifiziert, der Spitzen ausgibt. Die Einrichtung 76e liefert somit eine Zuordnungsvorschrift zu einem Deinterleaver 76f, der vier Eingänge und vier Ausgänge aufweist, wobei jeder Eingang mit jedem Ausgang verbunden ist.

Der Ausgang des Deinterleavers 76f ist derart gesteuert, daß die Signale jedes Eingangs der vier Eingänge selektiv abgenommen werden können, wie es durch die in Fig. 11 gezeigten gesteuerten Schalter schematisch veranschaulicht ist. Wird beispielsweise erfaßt, daß der Korrelator 76b Spitzen ausgibt, so muß davon ausgegangen werden, daß auf dem zweiten Eingang von oben des Deinterleavers 76f die erste verarbeitete Datensequenz anliegt. Die durch die Einrichtung 76e ausgegebene Zuordnungsvorschrift wäre dann derart gewählt, daß der Schalter, der mit dem obersten Ausgang des Deinterleavers 76f verbunden ist, das Eingangssignal von dem zweitobersten Eingang zu dem obersten Ausgang leiten wird. Aufgrund der im Codierer festgelegten Reihenfolge ist die Zuordnungsvorschrift dann derart gewählt, daß der zweite Ausgang von oben des Deinterleavers mit dem dritten Eingang von oben verbunden wird. Der dritte Ausgang würde dann mit dem vierten Eingang verbunden werden, während der vierte Ausgang mit dem ersten Eingang von oben verbunden wird. Am Ausgang des Deinterleavers, der dem Ausgang der Identifikationseinrichtung 76 von Fig. 7 entspricht, liegen somit vier verarbeitete Datensequenzen vor, von denen bekannt ist, daß am obersten Ausgang die erste verarbeitete Datensequenz anliegt, in der die erste Informationseinheit enthalten ist, daß am zweiten Ausgang die zweite verarbeitete Datensequenz anliegt, in der die zweite Informationseinheit enthalten ist, und daß weitere verarbeitete Datensequenzen anliegen, in denen weitere Informationseinheiten enthalten sein können.

Damit ist bekannt, welcher Datenstrom welche verarbeitete Datensequenz ist. Die Einrichtung 76e zur Spitzenerfassung hat ferner einen weiteren Ausgang zum Ausgeben der Zuordnungsvorschrift, da dieselbe ebenfalls bei einem bevorzugten Ausführungsbeispiel der vorliegenden Erfindung für den zweiten Informationskanal (Fig. 14) benötigt wird.

Fig. 12 zeigt eine detailliertere Darstellung der Einrichtungen 78, 80. Die Einrichtung 78 zum Extrahieren der ersten Informationseinheit umfaßt vorzugsweise ebenso wie die Einrichtung 70 oder 72 ein Matched-Filter 78a, dem ein Schwellenentscheider 78b nachgeschaltet ist. Entsprechendes trifft für die verarbeitete zweite Datensequenz zu, d. h. die Einrichtung 80 zum Extrahieren der zweiten Informationseinheit umfaßt ein Matched-Filter 80a sowie einen nachgeschalteten Schwellenentscheider 80b. Im Falle der hier beschriebenen Ausführungsform mit vier Zeitschlitzen sind weitere Matched-Filter und nachgeschaltete Schwellenentscheider vorgesehen, die zu den Elementen 80a bzw. 80b identisch sein können. Der Unterschied der Matched-Filter 78a und 80a besteht darin, daß das Matched-Filter 78a auf die erste Datensequenz abgestimmt ist, während das Matched-Filter 80a auf die zweite Datensequenz abgestimmt ist.

Aufgrund der Tatsache, daß bei dem Einbringen der Informationen in das Audiosignal zunächst eine 31-fache Spreizung durchgeführt worden ist, kann davon ausgegangen werden, daß das Ausgangssignal P des Matched-Filters 78a 30 mal einen relativ kleinen Wert ausgibt, wie es in Fig. 13 gezeigt ist, und dann einmal einen relativ großen Wert ausgibt, der, falls keine Bits verloren worden sind, eine relative Höhe von 31 haben wird. Selbstverständlich muß zur Decodierung der Informationseinheit das Ausgangssignal des Matched-Filters nicht die relative Höhe von 31 haben, sondern es dürfte aufgrund der vozugsweise verwendeten orthogonalen Pseudo-Noise-Rauscheigenschaft auch ein deutlich geringerer Korrelationswert ausreichen, wie beispielsweise der Wert 25. Alle 31 Perioden werden ferner die Schwellenentscheider 80b für den zweiten bis vierten Zeitschlitz ein positives bzw. negatives Ausgangssignal liefern, derart, daß ein Decodierer weiß, ob ein einmaliges Kopieren erlaubt ist, ob das Kopieren generell verboten ist, bzw. ob bereits eine Kopie durchgeführt worden ist, d. h. ob das Platzhalter-Bit gesetzt ist, wie es weiter hinten ausgeführt wird.

In Fig. 14 ist die Einrichtung 84 zum Ermitteln der Informationseinheiten des zweiten Informationskanals dargestellt. Dieselbe umfaßt in Analogie zum Codierer, der anhand von Fig. 3 dargestellt worden ist, einen Demultiplexer 84a sowie einen Deinterleaver 84b, dem schließlich eine Einrichtung 84c zum Ermitteln der Informationseinheiten des zweiten Informationskanals nachgeschaltet ist. Die Einrichtung 84c zum Ermitteln der Informationseinheiten des zweiten Informationskanals wird ausgangsseitig die Ausgangsdaten in den vier Zeitschlitzen des zweiten Informationskanals ausgeben, die beispielsweise Benutzerdaten, der ISRC sowie beliebige weitere Zusatzdaten sein können. Dazu wird der zweite Informationskanal mittels eines Demultiplexers 84a, der in Analogie zum Demultiplexer 74 (Fig. 11) arbeitet, in vier Datenströme demultiplext. Aufgrund der Tatsache, daß die beiden Informationskanäle synchron zueinander codiert worden sind, muß für den zweiten Informationskanal keine eigene Identifikation durchgeführt werden. Stattdessen kann die Zuordnungsvorschrift vom ersten Informationskanal verwendet werden, um die Eingangs/Ausgangs-Verbindungen des Deinterleavers 84b entsprechend einzustellen. Wurden die beiden Informationskanäle genau synchron zueinander codiert, so werden die Eingangs/Ausgangs-Verbindungen identisch zum Deinterleaver 76f sein.

Wurde jedoch im Codierer eine feste Verzögerung um eine bestimmte Anzahl von Bits zwischen dem ersten und dem zweiten Informationskanal eingesetzt, so kann diese Veränderung über eine einfache Modifikation der Zuordnungsvorschrift hier berücksichtigt werden.

Am Ausgang des Deinterleavers 84b liegen somit wiederum vier Datenströme vor, von denen bekannt ist, welcher Datenstrom welche Information (Data0, Data1, Data2 bzw. Data3) trägt. Nachdem der zweite Informationskanal keinerlei eigene Synchronisationsinformationen aufweist, um seine Nettodatenrate möglichst groß zu halten, ist es jedoch noch nicht bekannt, wann ein Datenwort tatsächlich beginnt. Dieser Beginn wird durch das Synchronisationssignal vom ersten Informationskanal, dessen Ableitung bezugnehmend auf Fig. 12 beschrieben worden ist, signalisiert. Empfängt die Einrichtung 84c ein Synchronisationssignal, so weiß sie, daß nun ein Datenwort beginnt. Es sei darauf hingewiesen, daß ein Datenwort am Ausgang der Einrichtung 84c bei dem bevorzugten Ausführungsbeispiel der vorliegenden Erfindung aus mehreren Bits bestehen wird, während die "Datenwörter" am Ausgang des D-Interleavers 76f (Fig. 11) lediglich ein einziges Bit umfassen. Bei den gewählten Längen der Datensequenzen hat ein Datenwort am Ausgang der Einrichtung 84c (Fig. 14) genau 31 Bit, bis ein neues Synchronisationssignal vom ersten Informationskanal kommt, um einen neuen Informationszyklus einzuleiten.

Wie es bereits dargestellt worden ist, ermöglicht das erfindungsgemäße Konzept die Realisierung von bezüglich Rechenleistung und damit Kosten skalierbaren Decodierern, d. h. Vorrichtungen zum Ermitteln von in das Audiosignal eingebrachten Informationen. Ist ein preisgünstiger Consumer-Decoder nur an den Kopierinformationen, d. h. am ersten Informationskanal, interessiert, so wird er die Decodierung des zweiten Informationskanals einfach unterlassen, d. h. er wird die Einrichtungen 72, 84 von Fig. 7 benötigen. Dies würde beim bevorzugten Beispiel zu einer Rechenzeiteinsparung von nahezu 50% im Vergleich zu dem Fall führen, bei dem die Informationen auf der Quelle 10 nur mittels eines einzigen Kanals in das Audiosignal eingebracht worden sind.

Wie es bereits mehrfach ausgeführt worden ist, ermöglicht das Unterteilen eines CDMA-Kanals in einzelne Zeitschlitze des nachträgliche Bearbeiten des Wasserzeichens, d. h. der eingebrachten Informationen. Dazu wird beim ersten Einbringen der Informationen der Wert des Bits 1 (Fig. 2) auf Null gesetzt, d. h. nicht mit Daten "aufgefüllt". Ein geeignetes Remark-Programm kann dann nachträglich die Lücke des Platzhalter-Bits Bit1 (Fig. 2) auffinden und dann das gewünschte Wasserzeichen setzen. Das Remark-Programm könnte beispielsweise durch einen Kopiervorgang aktiviert werden und nach einem erfolgten Kopieren das Bit1 mit Informationen beaufschlagen. Es würde dann folgendermaßen vorgehen.

Zunächst muß das Remark-Programm unter Verwendung der ersten Codesequenz den ersten Informationskanal aus dem bereits bestehenden Wasserzeichen extrahieren. Dies wird durch die Einrichtung 70 bewerkstelligt. Daran anschließend wird das Remark-Programm die bezüglich der Fig. 8-12 beschriebenen Operationen durchführen, um das Synchronisationssignal zu eruieren. Das Remark-Programm muß wissen, wo das Platzhalter-Bit, d. h. Bit1 (Fig. 12) ist. Nachdem das Remark-Programm festgestellt hat, wo die zeitliche Lage des Bits ist, wird es das Bit1 (Fig. 2) setzen, d. h. mit einem Wert 1 versehen, die zweite Datensequenz damit beaufschlagen, Multiplexen und mit der ersten Codesequenz spreizen, um schließlich nach einer "redundaten" Addition und Transformation einer Gewichtung und Kombination unterzogen zu werden. Im Gegensatz zum ursprünglichen Einbringen des Wasserzeichens werden die genannten Schritte jedoch lediglich ausschließlich mit dem zweiten Informationsbit durchgeführt, während das Remark-Programm sämtliche anderen Informationsbits des ersten Informationskanals und auch des zweiten Informationskanals zu Null setzt bzw. überhaupt nicht behandelt. Das Codemultiplex-Zeitsignal am Ausgang des Addierers 26 wird daher lediglich einen Verlauf haben, der der Energie aufgrund des nun gesetzten Platzhalters entspricht.

Energiemäßig betrachtet bedeutet dies, daß beim ersten Einbringen des Wasserzeichens in das Audiosignal die verfügbare Störenergie noch nicht voll ausgenutzt worden ist, d. h. die Energie liegt etwas unter der Maskierungsschwelle. Erst wenn dann das Remark-Programm das Platzhalterbit in das Audiosignal eingebracht hat, ist die psychoakustische Störenergie bis zur Maskierungsschwelle bzw. bis zu dem gewählten Wert in der Nähe der Maskierungsschwelle aufgefüllt. Damit kann das Remark-Programm nachträgliche Änderungen des Wasserzeichens durchführen, ohne daß die Audioqualität leidet. Dies erlaubt eine schrittweise Einbringung von Wasserzeichen wie folgt. Ein Hersteller eines Stücks könnte beispielsweise in das fertig produzierte Musikstück lediglich den ISRC sowie weitere zusätzliche Informationen im zweiten Informationskanal ebenso wie Bit0 des ersten Informationskanals einbringen, was zu einem vom Hersteller identifizierten Musikstück führt, das noch keinerlei Kopierinformationen hat. Ein Verteiler für Musikstücke, der die vom Hersteller der Musikstücke bearbeiteten Audiosignale erhält und an einzelne Kunden weiterverkauft, könnte dann unter Verwendung eines geeigneten Remark-Programms sowohl die Kopierinformationen des ersten Informationskanals als auch Benutzerinformationen über den eventuellen Käufer in das Audiosignal einmischen, ohne daß das Wasserzeichen des ursprünglichen Herstellers verändert werden muß bzw. neu verarbeitet werden muß. Der Käufer schließlich, der sich im Besitz eines autorisierten Decodierers befindet, könnte dann ebenfalls unter Verwendung eines speziell für ihn vorgesehenen Remark-Programms nach erfolgter Kopie das Kopierbit setzen und eincodieren. Es wird besonders darauf hingewiesen, daß dieses schrittweise Ergänzen des Wasserzeichens ohne Änderung des vorherigen Wasserzeichens ohne Beeinträchtigung der Audioqualität durchgeführt wird, da erst im letzten vorgesehenen Remark-Schritt die zur Verfügung stehende Energie vollständig ausgeschöpft wird. Damit ist zu sehen, daß das erfindungsgemäße Verfahren hohe Flexibilität sowohl auf der Codiererseite als auch auf der Decodiererseite ermöglicht.

Um noch größere Manipuliersicherheit zu erreichen, wird erfindungsgemäß der Fall berücksichtigt, daß ein Angreifer sämtliche Audiosignalabtastwerte um 180° invertiert. Es sei darauf hingewiesen, daß diese Invertierung zu keiner hörbaren Störung führt, daß jedoch ein Decodierer zum Decodieren des Wasserzeichens nicht mehr korrekt arbeiten kann, wenn nicht spezielle Vorkehrungen getroffen werden. Es wurde ausgeführt, daß die erste Informationseinheit bzw. bevorzugterweise das erste Bit, d. h., Bit0 immer zu Eins gesetzt wird, um zu signalisieren, daß das Audiosignal eingebrachte Informationen aufweist. Um gegenüber Phasendrehungen um 180° immun zu sein, wird daher beispielsweise zwischen dem Matched-Filter 78a und dem Schwellenentscheider 78b in Fig. 12 eine Vorzeichenbestimmung durchgeführt. Tritt hier eine negative Spitze auf, so weiß der Decodierer per Definition, daß eine Phasenumkehrung um 180° durchgeführt worden ist, da hier nur positive Spitzen zu erwarten sind. Es wird daher eine Phasenumkehrung der Spitzen in Form einer Betragsbildung durchgeführt. Um jedoch die 180° Phasendrehung auch für die restlichen Zeitschlitze des ersten Informationskanals und auch für den zweiten Informationskanal zu berücksichtigen, wird auch eine Phasenumdrehung der Ausgangssignale der entsprechenden Matched-Filter durchgeführt, die dann aktiviert wird, wenn eine negative Spitze hinter dem Matched-Filter 78a erkannt worden ist. Wenn keine negative Spitze erkannt wird, werden die Phasenumkehrungen deaktiviert, und die Signale laufen so wie sie von den jeweiligen Filtern ausgegeben werden, in die Schwellenentscheider hinein. Damit wird ein Angreifer durch eine Phasenumkehrung um 180° keinen Erfolg dabei haben, ein in ein Audiosignal eingebrachtes Wasserzeichen unlesbar zu machen. Er wird daher nach wie vor aufgrund seiner Benutzeridentifikation ermittelt werden können.

## Patentansprüche

1. Verfahren zum Einbringen von Informationen in ein Audiosignal, wobei die Informationen eine Mehrzahl von Informationseinheiten aufweisen, mit folgenden Schritten:
Beaufschlagen (16a) einer ersten Datensequenz mit einer ersten Informationseinheit, um eine verarbeitete erste Datensequenz zu erhalten, die die Informationen der ersten Informationseinheit trägt;
Beaufschlagen (16b) einer zweiten Datensequenz mit einer zweiten Informationseinheit, um eine verarbeitete zweite Datensequenz zu erhalten, die die Informationen der zweiten Informationseinheit trägt, wobei sich die zweite Datensequenz von der ersten Datensequenz unterscheidet;
Multiplexen (18) der verarbeiteten ersten Datensequenz und der verarbeiteten zweiten Datensequenz, um einen Zeitmultiplex-Datenstrom zu erhalten, der die erste verarbeitete Datensequenz und die zweite verarbeitete Datensequenz aufweist, wobei der Zeitmultiplex-Datenstrom einen ersten Informationskanal bildet;
Bilden (20) eines zweiten Informationskanals, der weitere Informationseinheiten der in das Audiosignal einzubringenden Informationen aufweist, wobei die Länge des zweiten Informationskanals gleich der Länge des ersten Informationskanals ist;
Beaufschlagen (22) des ersten Informationskanals mit einer ersten Codesequenz, um einen gespreizten ersten Informationskanal zu erhalten;
Beaufschlagen (24) des zweiten Informationskanals mit einer zweiten Codesequenz, die sich von der ersten Codesequenz unterscheidet, um einen gespreizten zweiten Informationskanal zu erhalten, wobei der erste und der zweite Informationskanal gleich lang sind;
Addieren (26) des gespreizten ersten und des gespreizten zweiten Informationskanals, um ein Codemultiplex-Zeitsignal, das die einzubringenden Informationen aufweist, zu erzeugen;
Erzeugen (28) einer Spektraldarstellung des Codemultiplex-Zeitsignals;
Berechnen (30) einer Maskierungsschwelle des Audiosignals;
Gewichten (32) der spektralen Darstellung des Codemultiplex-Zeitsignals, derart, daß die Energie der gewichteten spektralen Darstellung des Codemultiplex-Zeitsignals die Maskierungsschwelle des Audiosignals im wesentlichen nicht überschreitet; und
Kombinieren (34) der gewichteten spektralen Darstellung mit dem Audiosignal, um ein Audiosignal zu erzeugen, in dem die Informationen eingebracht sind.

2. Verfahren nach Anspruch 1, bei dem die erste und die zweite Datensequenz zueinander orthogonal sind.

3. Verfahren nach Anspruch 1 oder 2, bei dem die erste und die zweite Codesequenz zueinander orthogonal sind.

4. Verfahren nach einem der vorhergehenden Ansprüche, bei dem die erste und die zweite Datensequenz sowie die erste und die zweite Codesequenz Pseudo-Noise-Sequenzen sind.

5. Verfahren nach einem der vorhergehenden Ansprüche,
bei dem die Länge einer Informationseinheit ein Bit beträgt,
bei dem die Längen der ersten und der zweiten Datensequenz größer als ein Bit sind; und
bei dem die Längen der ersten und der zweiten Codesequenz größer als die Längen der ersten und der zweiten Datensequenz sind.

6. Verfahren nach einem der vorhergehenden Ansprüche,
bei dem das Audiosgnal eine Audioabtastrate hat, wobei die erste und die zweite Codesequenz Chips aufweisen, deren Längen gleich der Länge eines Abtastwerts ist, um eine abtastwertweise bzw. chipweise Kombination im Schritt des Kombinierens zu ermöglichen.

7. Verfahren nach einem der vorhergehenden Ansprüche, bei dem der Schritt des Kombinierens folgende Teilschritte aufweist:
Transformieren der gewichteten spektralen Darstellung des Codemultiplex-Zeitsignals in den Zeitbereich, um ein gewichtetes Zeitsignal zu erhalten, das die einzubringenden Informationen aufweist; und
abtastwertweises Addieren (34b) des Audiosignals und des gewichteten Zeitsignals.

8. Verfahren nach einem der vorhergehenden Ansprüche, bei dem der Schritt des Multiplexens der ersten verarbeiteten Datensequenz und der zweiten verarbeiteten Datensequenz folgenden Schritt aufweist:
Verschachteln (44) der verarbeiteten ersten Datensequenz und der verarbeiteten zweiten Datensequenz.

9. Verfahren nach einem der vorhergehenden Ansprüche, bei dem im Schritt des Bildens (20) des zweiten Informationskanals eine Anzahl von Informationseinheiten genommen wird, die gleich der Anzahl von Informationseinheiten, die über den ersten Informationskanal übertragen werden, multipliziert mit der Anzahl von Bits der ersten Datensequenz ist.

10. Verfahren nach einem der vorhergehenden Ansprüche, bei dem die eingebrachten Informationen Kopiererlaubnisinformationen für das Audiosignal umfassen,
bei dem die erste Informationseinheit, die über den ersten Informationskanal übertragen wird, anzeigt, daß das Audiosignal eingebrachte Informationen aufweist,
bei dem sich die zweite Informationseinheit auf Kopiermodalitäten bezieht, und
bei dem die Informationseinheiten, die in dem zweiten Informationskanal übertragen werden, eine Identifikation des Musikstücks und/oder des Nutzers umfassen.

11. Verfahren nach Anspruch 10, bei dem die zweite Informationseinheit anzeigt, ob bzw. wie oft das Audiosignal kopiert werden darf.

12. Verfahren nach einem der vorhergehenden Ansprüche, das ferner folgenden Schritt aufweist:
Beaufschlagen (16c) der zweiten Datensequenz mit einer weiteren Informationseinheit, um eine weitere verarbeitete zweite Datensequenz zu erhalten; und
bei dem im Schritt des Multiplexens (18) ein Zeitmultiplex-Datenstrom erzeugt wird, der auch die weitere verarbeitete Datensequenz aufweist.

13. Verfahren nach einem der vorhergehenden Ansprüche, das ferner folgenden Schritt aufweist:
Beaufschlagen der zweiten Datensequenz mit einer Platzhalter-Informationseinheit (Bit1), die die zweite Informationseinheit oder eine weitere Informationseinheit ist, wobei die Platzhalter-Informationseinheit keine Informationen trägt und damit keinen Energiebeitrag liefert;
Multiplexen der verarbeiteten zweiten Datensequenz, die die Platzhalterinformationseinheit umfaßt, mit der verarbeiteten ersten Datensequenz und der verarbeiteten zweiten Datensequenz, um den ersten Informationskanal zu erhalten; und
zu einem späteren Zeitpunkt nach dem Erzeugen des Audiosignals, in das die Informationen eingebracht sind, und als Reaktion auf ein Ereignis,
- Auffinden des Bereichs in dem Audiosignal, dem die Platzhalter-Informationseinheit zugeordnet ist;
- Eintragen eines Kennzeichens, das auf das Ereignis hinweist, in die Platzhalter-Informationseinheit; und
- Verarbeiten der Platzhalter-Information, die das Kennzeichen umfaßt, wie die zweite Informationseinheit, derart, daß das Kennzeichen in das Audiosignal eingebracht wird, ohne daß die zuvor eingebrachten Informationen verändert werden, und ohne daß das Kennzeichen zu einer hörbaren Störung führt.

14. Verfahren nach einem der vorhergehenden Ansprüche, bei dem die Informationseinheit durch antipodische Signale dargestellt werden.

15. Verfahren zum Ermitteln von in einem Audiosignal eingebrachten Informationen, wobei die Informationen in zwei gespreizten Informationskanälen vorhanden sind, wobei dem ersten gespreizten Informationskanal eine erste Codesequenz und dem zweiten gespreizten Informationskanal eine zweite Codesequenz zugeordnet sind, wobei der erste Informationskanal eine Zeitmultiplex-Datensequenz aufweist, die eine erste verarbeitete Datensequenz und eine zweite verarbeitete Datensequenz umfaßt, und wobei die erste verarbeitete Datensequenz eine erste Informationseinheit, und die zweite verarbeitete Datensequenz eine zweite Informationseinheit der verarbeiteten Informationen darstellen, mit folgenden Schritten:
Extrahieren (70) des ersten Informationskanals aus dem Audiosignal durch Korrelieren des Audiosignals mit der ersten Codesequenz;
Feststellen (76) der verarbeiteten ersten Datensequenz in dem ersten Informationskanal durch Korrelieren (76a, 76b) des ersten Informationskanals mit der ersten Datensequenz, wobei eine verarbeitete erste Datensequenz dann vorliegt, wenn während des Korrelierens eine Spitze auftritt;
Extrahieren (78a, 78b) der ersten Informationseinheit aus der verarbeiteten ersten Datensequenz; und
Extrahieren (80a, 80b) der zweiten Informationseinheit aus der verarbeiteten zweiten Datensequenz durch Korrelieren des anderen Datenstroms mit der zweiten Datensequenz.

16. Verfahren nach Anspruch 15, bei dem der erste und der zweite Informationskanal nach einer Verschachtelungsvorschrift verschachtelt sind, das ferner folgenden Schritt aufweist:
Demultiplexen (74) des ersten Informationskanals unter Verwendung der Verschachtelungsvorschrift, um zwei Datenströme zu erhalten, von denen einer die verarbeitete erste Datensequenz und der andere die verarbeitete zweite Datensequenz ist;
und bei dem im Schritt des Feststellens festgestellt wird, welcher der beiden Datenströme die verarbeitete erste Datensequenz darstellt, indem die beiden Datenströme mit der ersten Datensequenz korreliert werden (76a, 76b), wobei der Datenstrom, bei dem während des Korrelierens mit der ersten Datensequenz eine Spitze erzeugt wird, die verarbeitete erste Datensequenz ist (76e).

17. Verfahren nach Anspruch 15 oder 16, das ferner folgenden Schritt aufweist:
Extrahieren (72) des zweiten Informationskanals aus dem Audiosignal durch Korrelieren des Audiosignals mit der zweiten Codesequenz, um den zweiten Informationskanal zu erhalten;
Verwenden (84c) der extrahierten ersten Informationseinheit als Synchronisationssignal (82), um den zweiten Informationskanal auf den ersten Informationskanal zu synchronisieren; und
Ermitteln (84) der Informationseinheiten aus dem zweiten Informationskanal unter Verwendung des Synchronisationssignals.

18. Verfahren nach Anspruch 17, bei dem der zweite Informationskanal ebenfalls verschachtelte Datenströme aufweist, die nach derselben Verschachtelungsvorschrift wie der erste Informationskanal verschachtelt sind, wobei das Verfahren ferner folgende Schritte aufweist:
Demultiplexen (84a) des zweiten Informationskanals in Datenströme des zweiten Informationskanals; und
Bestimmen (84b), welcher Datenstrom der Datenströme des zweiten Informationskanals welche Informationseinheit darstellt, unter Verwendung der im Schritt des Feststellens (76) gewonnenen Zuordnung bezüglich des ersten Informationskanals.

19. Verfahren nach einem der Ansprüche 15 bis 18, bei dem der Schritt des Extrahierens (70) des ersten Informationskanals folgende Schritte aufweist:
Selektieren (90, 98) von durch das Korrelieren erzeugten Spitzen, um ein Signal zu erzeugen, das nur noch aus Impulsen besteht, die ein positives oder negatives Vorzeichen haben;
Bestimmen (100) des Vorzeichens jeder Spitze; und
Erzeugen von Pulsen aus den Spitzen, wobei jeder Puls lediglich einen von zwei Zuständen haben kann, wobei die Zustände der Pulse durch die Vorzeichen der Spitzen bestimmt sind, um den ersten Informationskanal zu erzeugen.

20. Verfahren nach einem der Ansprüche 15 bis 19, bei dem in den Schritten des Extrahierens (78) der ersten Informationseinheit und des Extrahierens (80) der zweiten Informationseinheit eine Schwellwertentscheidung (78b, 80b) durchgeführt wird, derart, daß ein positives oder negatives Signal erzeugt wird, wenn ein Ergebniswert des Korrelierens eine vorbestimmte Schwelle überschreitet.

21. Verfahren nach einem der Ansprüche 15 bis 20,
bei dem die Informationseinheiten durch binäre Signale dargestellt sind, die einen positiven oder negativen Signalpegel haben,

22. Verfahren nach Anspruch 21,
bei dem im Schritt des Extrahierens der ersten Informationseinheit das Vorzeichen des Signalpegels festgestellt wird, der die erste Informationseinheit darstellt,
bei dem im Schritt des Extrahierens der zweiten Informationseinheit das Vorzeichen des Signalpegels, der die zweite Informationseinheit darstellt, festgestellt wird, und mit dem Vorzeichen des Signalpegels, der die erste Informationseinheit darstellt, verglichen wird, und
bei dem für die zweite Informationseinheit ein erster Wert bestimmt wird, wenn beide Vorzeichen gleich sind, oder ein zweiter Wert bestimmt wird, wenn beide Vorzeichen unterschiedlich sind.

23. Verfahren nach einem der Ansprüche 15 bis 22, bei dem die erste Informationseinheit anzeigt, daß überhaupt Informationen in das zu decodierende Audiosignal eingebracht sind, und
bei dem die zweite Informationseinheit Kopiererlaubnisinformationen umfaßt.

24. Verfahren nach einem der Ansprüche 16 bis 23,
bei dem der zweite Informationskanal Informationen über den Benutzer des Audiosignals und/oder eine Kennzeichnung des Audiosignals umfaßt.

25. vorrichtung zum Einbringen von Informationen in ein Audiosignal, wobei die Informationen eine Mehrzahl von Informationseinheiten aufweisen, mit folgenden Merkmalen:
einer Einrichtung zum Beaufschlagen (16a) einer ersten Datensequenz mit einer ersten Informationseinheit, um eine verarbeitete erste Datensequenz zu erhalten, die die Informationen der ersten Informationseinheit trägt;
einer Einrichtung zum Beaufschlagen (16b) einer zweiten Datensequenz mit einer zweiten Informationseinheit, um eine verarbeitete zweite Datensequenz zu erhalten, die die Informationen der zweiten Informationseinheit trägt, wobei sich die zweite Datensequenz von der ersten Datensequenz unterscheidet;
einer Einrichtung zum Multiplexen (18) der verarbeiteten ersten Datensequenz und der verarbeiteten zweiten Datensequenz, um einen Zeitmultiplex-Datenstrom zu erhalten, der die erste verarbeitete Datensequenz und die zweite verarbeitete Datensequenz aufweist, wobei der Zeitmultiplex-Datenstrom einen ersten Informationskanal bildet;
einer Einrichtung zum Bilden (20) eines zweiten Informationskanals, der weitere Informationseinheiten der in das Audiosignal einzubringenden Informationen aufweist, wobei die Länge des zweiten Informationskanals gleich der Länge des ersten Informationskanals ist;
einer Einrichtung zum Beaufschlagen (22) des ersten Informationskanals mit einer ersten Codesequenz, um einen gespreizten ersten Informationskanal zu erhalten;
einer Einrichtung zum Beaufschlagen (24) des zweiten Informationskanals mit einer zweiten Codesequenz, die sich von der ersten Codesequenz unterscheidet, um einen gespreizten zweiten Informationskanal zu erhalten, wobei der erste und der zweite Informationskanal gleich lang sind;
einer Einrichtung zum Addieren (26) des gespreizten ersten und des gespreizten zweiten Informationskanals, um ein Codemultiplex-Zeitsignal, das die einzubringenden Informationen aufweist, zu erzeugen;
einer Einrichtung zum Erzeugen (28) einer Spektraldarstellung des Codemultiplex-Zeitsignals;
einer Einrichtung zum Berechnen (30) einer Maskierungsschwelle des Audiosignals;
einer Einrichtung zum Gewichten (32) der spektralen Darstellung des Codemultiplex-Zeitsignals, derart, daß die Energie der gewichteten spektralen Darstellung des Codemultiplex-Zeitsignals die Maskierungsschwelle des Audiosignals im wesentlichen nicht überschreitet; und
einer Einrichtung zum Kombinieren (34) der gewichteten spektralen Darstellung mit dem Audiosignal, um ein Audiosignal zu erzeugen, in dem die Informationen eingebracht sind.

26. Vorrichtung zum Ermitteln von in einem Audiosignal eingebrachten Informationen, wobei die Informationen in zwei gespreizten Informationskanälen vorhanden sind, wobei dem ersten gespreizten Informationskanal eine erste Codesequenz und dem zweiten gespreizten Informationskanal eine zweite Codesequenz zugeordnet sind, wobei der erste Informationskanal eine Zeitmultiplex-Datensequenz aufweist, die eine erste verarbeitete Datensequenz und eine zweite verarbeitete Datensequenz umfaßt, und wobei die erste verarbeitete Datensequenz eine erste Informationseinheit, und die zweite verarbeitete Datensequenz eine zweite Informationseinheit der verarbeiteten Informationen darstellt, mit folgenden Merkmalen:
einer Einrichtung zum Extrahieren (70) des ersten Informationskanals aus dem Audiosignal durch Korrelieren des Audiosignals mit der ersten Codesequenz;
einer Einrichtung zum Feststellen (76) der verarbeiteten ersten Datensequenz in dem ersten Informationskanal durch Korrelieren (76a, 76b) des ersten Informationskanals mit der ersten Datensequenz, wobei eine verarbeitete erste Datensequenz dann vorliegt, wenn während des Korrelierens eine Spitze auftritt;
einer Einrichtung zum Extrahieren (78a, 78b) der ersten Informationseinheit aus der verarbeiteten ersten Datensequenz; und
einer Einrichtung zum Extrahieren (80a, 80b) der zweiten Informationseinheit aus der verarbeiteten zweiten Datensequenz durch Korrelieren des anderen Datenstroms mit der zweiten Datensequenz.

27. Vorrichtung nach Anspruch 26, bei der der erste und der zweite Informationskanal nach einer Verschachtelungsvorschrift verschachtelt sind, das ferner folgendes Merkmal aufweist:
eine Einrichtung zum Demultiplexen (74) des ersten Informationskanals unter Verwendung der Verschachtelungsvorschrift, um zwei Datenströme zu erhalten, von denen einer die verarbeitete erste Datensequenz und der andere die verarbeitete zweite Datensequenz ist;
und bei der die einrichtung zum Feststellen angeordnet ist um festzustellen, welcher der beiden Datenströme die verarbeitete erste Datensequenz darstellt, indem die beiden Datenströme mit der ersten Datensequenz korrelierbar sind (76a, 76b), wobei der Datenstrom, bei dem während des Korrelierens mit der ersten Datensequenz eine Spitze erzeugt wird, die verarbeitete erste Datensequenz ist (76e).

## Claims

1. Method for inserting information into an audio signal, the information having a plurality of information units, comprising the following steps:
providing (16a) a first data sequence with a first information unit to obtain a processed first data sequence carrying information of the first information unit;
providing (16b) a second data sequence with a second information unit to obtain a processed second data sequence carrying information of the second information unit, the second data sequence being different to the first data sequence;
multiplexing (18) the processed first data sequence and the processed second data sequence to obtain a time multiplex data stream having the first processed data sequence and the second processed data sequence, the time multiplex data stream forming a first information channel;
forming (20) a second information channel having further information units of the information to be introduced into the audio signal, the length of the second information channel being equal to the length of the first information channel;
providing (22) the first information channel with a first code sequence to obtain a spread first information channel;
providing (24) the second information channel with a second code sequence which differs from the first code sequence to obtain a spread second information channel, the first and the second information channel having the same length;
adding (26) the spread first and the spread second information channel to generate a code multiplex time signal having the information to be introduced;
generating (28) a spectral representation of the code multiplex time signal;
computing (30) a masking threshold of the audio signal;
weighting (32) the spectral representation of the code multiplex time signal such that the energy of the weighted spectral representation of the code multiplex time signal does not considerably exceed the masking threshold of the audio signal; and
combining (34) the weighted spectral representation with the audio signal to generate an audio signal into which information are introduced.

2. Method according to claim 1, wherein the first and the second data sequence are orthogonal to each other.

3. Method according to claim 1 or 2, wherein the first and the second code sequence are orthogonal to each other.

4. Method according to one of the previous claims, wherein the first and the second data sequence as well as the second code sequence are pseudo noise sequences.

5. Method according to one of the previous claims, wherein the length of one information unit is one bit,
wherein the length of the first and the second data sequence is greater than one bit; and
wherein the length of the first and the second code sequence is greater than the length of the first and the second data sequence.

6. Method according to one of the previous claims, wherein the audio signal has an audio sampling rate, the first and the second code sequence having chips whose lengths are equal to the length of one sample, to enable a sample-wise or chip-wise combination in the step of combining.

7. Method according to one of the previous claims, wherein the step of combining comprises the following substeps:
transforming the weighted spectral representation of the code multiplex time signal into the time domain to obtain a weighted time signal having the information to be introduced; and
sample-wise adding (34b) of the audio signal and the weighted time signal.

8. Method according to one of the previous claims, wherein the step of multiplexing the first process data sequence and the second process data sequence comprises the following step:
nesting (44) the processed first data sequence and the processed second data sequence.

9. Method according to one of the previous claims, wherein in the step of forming (20) the second information channel a number of information units is taken, which is equal to the number of information units transmitted via the first information channel, multiplied with the number of bits of the first data sequence.

10. Method according to one of the previous claims, wherein the introduced information comprises copy permission information for the audio signal,
wherein the first information unit being transmitted via the first information channel shows that the audio signal has introduced information,
wherein the second information unit refers to copy modalities, and
wherein the information units being transmitted in the second information channel comprise an identification of the music and/or the user.

11. Method according to claim 10, wherein the second information unit shows, whether and how often the audio signal may be copied, respectively.

12. Method according to one of the previous claims, further comprising the following steps:
providing (16c) the second data sequence with another information unit to obtain another processed second data sequence; and
wherein in the step of multiplexing (18) a time multiplex data stream is generated, also having the further processed data sequence.

13. Method according to one of the previous claims, further comprising:
providing the second data sequence with a placeholder information unit (Bit1), which is the second information unit or a further information unit, the placeholder information unit not carrying information and thus providing no energy contribution;
multiplexing the processed second data sequence comprising the placeholder information unit with the processed first data sequence and the processed second data sequence to obtain the first information channel; and
at a later time after generating the audio signal into which information are introduced, and as reaction to an event,
- finding the area in the audio signal the placeholder information unit is associated to;
- inserting a mark referring to the event into the placeholder information unit; and
- processing the placeholder information comprising the mark like the second information unit such that the mark is introduced into the audio signal without changing the previously introduced information and without the mark leading to an audible interference.

14. Method according to one of the previous claims, wherein the information unit is illustrated by antipodal signals.

15. Method for determining information introduced into an audio signal, the information being present in two spread information channels, a first code sequence being associated to the first spread information channel and a second code sequence being associated to the second spread information channel, the first information channel having a time multiplex data sequence comprising a first processed data sequence and a second processed data sequence, and the first processed data sequence representing a first information unit, and the second processed data sequence representing a second information unit of the processed information, comprising the following steps:
extracting (70) the first information channel from the audio signal by correlating the audio signal with the first code sequence;
detecting (76) the processed first data sequence in the first information channel by correlating (76a, 76b) the first information channel with the first data sequence, a processed first data sequence being present when a peak occurs during correlating;
extracting (78a, 78b) the first information unit from the processed first data sequence; and
extracting (80a, 80b) the second information unit from the processed second data sequence by correlating the other data stream with the second data sequence.

16. Method according to claim 15, wherein the first and the second information channel are nested according to the nesting regulation, further comprising:
demultiplexing (74) the first information channel by using the nesting regulation to obtain two data streams, one of which is the processed first data sequence and the other the processed second data sequence;
and wherein it is established in the step of establishing, which of the two data streams represents the processed first data sequence, by correlating the two data streams with the first data sequence (76a, 76b), wherein the data stream in which a peak is generated during correlating with the first data sequence is the processed first data sequence (76e).

17. Method according to claim 15 or 16, further comprising:
extracting (72) the second information channel from the audio signal by correlating the audio signal with the second code sequence to obtain the second information channel;
using (84c) the extracted first information unit as synchronization signal (82) to synchronize the second information channel on the first information channel; and
determining (84) the information units from the second information channel by using the synchronization signal.

18. Method according to claim 17, wherein the second information channel also comprises nested data streams nested according to the same nesting regulation as the first information channel, the method further comprising:
demultiplexing (84a) the second information channel into data streams of the second information channel; and
determining (84b), which data stream of the data streams of the second information channel represents which information unit, by using the allocation obtained in the step of establishing (76) regarding the first information channel.

19. Method according to one of the claims 15 to 18, wherein the step of extracting (70) the first information channel comprises:
selecting (90, 98) peaks generated by correlating to generate a signal only consisting of impulses having a positive or negative sign;
determining (100) the sign of each peak; and
generating impulses out of the peaks, wherein each impulse can only have one of two states, the states of the impulses being determined by the signs of the peaks to generate the first information channel.

20. Method according to one of the claims 15 to 19, wherein a threshold decision (78b, 80b) is carried out in the steps of extracting (78) the first information unit and extracting (80) the second information unit, such that a positive or negative signal will be generated, when a result value of correlating exceeds a predetermined threshold.

21. Method according to one of the claims 15 to 20, wherein the information units are represented by binary signals having a positive or negative signal level.

22. Method according to claim 21, wherein in the step of extracting the first information unit the sign of the signal level representing the first information unit is established,
wherein in the step of extracting the second information unit the sign of the signal level representing the second information unit will be established and compared to the sign of the signal level representing the first information unit, and
wherein a first value will be determined for the second information unit if both signs are equal, or a second value will be determined if both signs are different.

23. Method according to one of the claims 15 to 22, wherein the first information unit shows that information has been introduced into the audio signal to be decoded at all, and
wherein the second information unit comprises copy permission information.

24. Method according to one of the claims 16 to 23,
wherein the second information channel comprises information about the user of the audio signal and/or a mark of the audio signal.

25. Apparatus for introducing information into an audio signal, the information having a plurality of information units, comprising:
means for providing (16a) a first data sequence with a first information unit to obtain a processed first data sequence carrying the information of the first information unit;
means for providing (16b) a second data sequence with a second information unit to obtain a processed second data sequence carrying the information of the second information unit, the second data sequence differing from the first data sequence;
means for multiplexing (18) the processed first data sequence and the processed second data sequence to obtain a time multiplex data stream having the first processed data sequence and the second processed data sequence, the time multiplex data stream forming a first information channel;
means for forming (20) a second information channel having further information units of the information to be introduced into the audio signal, the length of the second information channel being equal to the length of the first information channel;
means for providing (22) the first information channel with a first code sequence to obtain a spread first information channel;
means for providing (24) the second information channel with a second code sequence differing from the first code sequence to obtain a spread second information channel, the first and the second information channel having the same length;
means for adding (26) the spread first and the spread second information channel to generate a code multiplex time signal having the information to be introduced;
means for generating (28) a spectral representation of the code multiplex time signal;
means for computing (30) a masking threshold of the audio signal;
means for weighting (32) the spectral representation of the code multiplex time signal, such that the energy of the weighted spectral representation of the code multiplex time signal does not essentially exceed the masking threshold of the audio signal; and
means for combining (34) the weighted spectral representation with the audio signal to generate a audio signal into which information is introduced.

26. Apparatus for determining information introduced into an audio signal, the information being present in two spread information channels, a first code sequence being associated to the first spread information channel and a second code sequence being associated to the second spread information channel, the first information channel having a time multiplex data sequence comprising a first processed data sequence and a second processed data sequence and the first processed data sequence representing a first information unit and the second processed data sequence representing a second information unit of the processed information, comprising:
means for extracting (70) the first information channel from the audio signal by correlating the audio signal with the first code sequence;
means for establishing (76) the processed first data sequence in the first information channel by correlating (76a, 76b) the first information channel with the first data sequence, a processed first data sequence being present when a peak occurs during correlating;
means for extracting (78a, 78b) the first information unit from the processed first data sequence; and
means for extracting (80a, 80b) the second information unit from the processed second data sequence by correlating the other data stream with the second data sequence.

27. Apparatus according to claim 26, wherein the first and the second information channel are nested according to a nesting regulation, further comprising:
means for demultiplexing (74) the first information channel by using the nesting regulation to obtain two data streams, one of which is the processed first data sequence and the other the processed second data sequence;
and wherein means for establishing is arranged to establish, which of the two data streams represents the processed data sequence, the two data streams being correlatable with the first data sequence (76a, 76b), wherein the data stream, in which a peak is generated during correlating with the first data sequence, is the processed first data sequence (76e).

## Revendications

1. Procédé pour introduire des informations dans un signal audio, les informations présentant une pluralité d'unités d'information, aux étapes suivantes consistant à :
alimenter (16a) une première séquence de données par une première unité d'informations, pour obtenir une première séquence de données traitée portant les informations de la première unité d'informations ;
alimenter (16b) une seconde séquence de données par une seconde unité d'informations, pour obtenir une seconde séquence de données traitée portant les informations de la seconde unité d'informations, la seconde séquence de données étant différente de la première séquence de données ;
multiplexer (18) la première séquence de données traitée et la seconde séquence de données traitée, pour obtenir un courant de données multiplexe dans le temps présentant la première séquence de données traitée et la seconde séquence de données traitée, le courant de données multiplexe dans le temps formant un premier canal d'informations ;
former (20) un second canal d'informations présentant d'autres unités d'information des informations à introduire dans le signal audio, la longueur du second canal d'informations étant égale à la longueur du premier canal d'informations ;
alimenter (22) le premier canal d'informations par une première séquence de codes, pour obtenir un premier canal d'informations dispersé ;
alimenter (24) le second canal d'informations par une seconde séquence de codes différente de la première séquence de codes, pour obtenir un second canal d'informations dispersé, le premier et le second canal d'informations étant de même longueur ;
additionner (26) le premier et le second canal d'informations dispersé, pour générer un signal dans le temps multiplexe par répartition du code et présentant les informations à introduire ;
générer (28) une représentation spectrale du signal dans le temps multiplexe par répartition du code;
calculer (30) un seuil de masquage du signal audio ;
pondérer (32) la représentation spectrale du signal dans le temps multiplexe par répartition du code, de sorte que l'énergie de la représentation spectrale pondérée du signal dans le temps multiplexe par répartition du code n'excède pas substantiellement le seuil de masquage du signal audio ; et
combiner (34) la représentation spectrale pondérée avec le signal audio, pour générer un signal audio dans lequel sont introduites les informations.

2. Procédé selon la revendication 1, dans lequel la première et la seconde séquence de données sont orthogonales l'une à l'autre.

3. Procédé selon la revendication 1 ou 2, dans lequel la première et la seconde séquence de codes sont orthogonales l'une à l'autre.

4. Procédé selon l'une des revendications précédentes, dans lequel la première et la seconde séquence de données ainsi que la première et la seconde séquence de codes sont des séquences de pseudo-bruit.

5. Procédé selon l'une des revendications précédentes, dans lequel la longueur d'une unité d'information est d'un bit, dans lequel les longueurs de la première et de la seconde séquence de données sont supérieures à un bit ; et
dans lequel les longueurs de la première et de la seconde séquence de codes sont supérieures aux longueurs de la première et de la seconde séquence de données.

6. Procédé selon l'une des revendications précédentes, dans lequel le signal audio a un taux de balayage audio, la première et la seconde séquence de codes présentant des puces dont les longueurs sont égales à la longueur d'une valeur de balayage, pour permettre une combinaison par valeur de balayage ou par chip à l'étape de combinaison.

7. Procédé selon l'une des revendications précédentes, dans lequel l'étape de combinaison présente les étapes partielles suivantes consistant à :
transformer au domaine du temps la représentation spectrale pondérée du signal dans le temps multiplexe par répartition du code, pour obtenir un signal dans le temps pondéré présentant les informations à introduire ; et
additionner par valeur de balayage (34b) le signal audio et le signal dans le temps pondéré.

8. Procédé selon l'une des revendications précédentes, dans lequel l'étape de multiplexage de la première séquence de données traitée et de la seconde séquence de données traitée présente l'étape suivante consistant à :
emboîter (44) la première séquence de données traitée et la seconde séquence de données traitée.

9. Procédé selon l'une des revendications précédentes, dans lequel il est prélevé, à l'étape de formation (20) du second canal d'informations, un nombre d'unités d'information qui est égal au nombre d'unités d'information transmises par le premier canal d'informations multiplié par le nombre de bits de la première séquence de données.

10. Procédé selon l'une des revendications précédentes, dans lequel les informations introduites comportent des informations d'autorisation de copie du signal audio,
dans lequel la première unité d'information transmise par le premier canal d'informations indique que le signal audio présente des informations introduites,
dans lequel la seconde unité d'information concerne les modalités de copie, et
dans lequel les unités d'information transmises dans le second canal d'informations comportent une identification de l'oeuvre musicale et/ou de l'utilisateur.

11. Procédé selon la revendication 10, dans lequel la seconde unité d'information indique si ou combien de fois le signal audio peut être copié.

12. Procédé selon l'une des revendications précédentes, présentant, par ailleurs, l'étape suivante consistant à :
alimenter (16c) la seconde séquence de données par une autre unité d'information, pour obtenir une autre seconde séquence de données traitée ; et
dans lequel est généré, à l'étape de multiplexage (18), un courant de données multiplex dans le temps présentant également l'autre séquence de données traitée.

13. Procédé selon l'une des revendications précédentes, présentant, par ailleurs, l'étape suivante consistant à :
alimenter la seconde séquence de données par une unité d'informations de réserve de place (Bitl), qui est la seconde unité d'informations ou une autre unité d'informations, l'unité d'informations de réserve de place ne portant pas d'informations et, de ce fait, n'apportant pas de contribution en énergie ;
multiplexer la seconde séquence de données traitée comportant l'unité d'informations de réserve de place avec la première séquence de données traitée et la seconde séquence de données traitée, pour obtenir le premier canal d'informations ; et
à un moment ultérieur après la génération du signal audio dans lequel sont introduites les informations, et en réaction à un événement,
- trouver la zone dans le signal audio à laquelle est associée l'unité d'informations de réserve de place ;
- entrer dans l'unité d'informations de réserve de place un repère référant à l'événement ; et
- traiter l'information de réserve de place comportant le repère, comme la seconde unité d'informations, de sorte que le repère soit introduit dans le signal audio, sans que les informations introduites auparavant ne soient modifiées et sans que le repère n'entraîne une perturbation audible.

14. Procédé selon l'une des revendications précédentes, dans lequel l'unité d'informations est représentée par des signaux antipodiques.

15. Procédé pour déterminer des informations introduites dans un signal audio, les informations étant présentes dans deux canaux d'informations dispersés, au premier canal d'informations dispersé étant associée une première séquence de codes et au second canal d'informations dispersé étant associée une seconde séquence de codes, le premier canal d'informations présentant une séquence de données multiplex dans le temps comportant une première séquence de données traitée et une seconde séquence de données traitée, et la première séquence de données traitée représentant une première unité d'informations et la seconde séquence de données traitée une seconde unité d'informations des informations traitées, aux étapes suivantes consistant à :
extraire (70) du signal audio le premier canal d'informations en corrélant le signal audio avec la première séquence de codes ;
constater (76) la première séquence de données traitée dans le premier canal d'informations en corrélant (76a, 76b) le premier canal d'informations avec la première séquence de données, une première séquence de données traitée étant présente lorsqu'il se présente une pointe pendant la corrélation ;
extraire (78a, 78b) de la première séquence de données traitée la première unité d'informations ; et
extraire (80a, 80b) de la seconde séquence de données traitée la seconde unité d'informations en corrélant l'autre courant de données avec la seconde séquence de données.

16. Procédé selon la revendication 15, dans lequel le premier et le second canal d'information sont emboîtés selon une prescription d'emboîtement, comportant, par ailleurs, l'étape suivante consistant à :
démultiplexer (74) le premier canal d'informations en utilisant la prescription d'emboîtement, pour obtenir deux courants de données dont l'un est la première séquence de données traitée et l'autre est la seconde séquence de données traitée ;
et dans lequel il est constaté, à l'étape de constatation, lequel des deux courants de données courants de données représente la première séquence de données traitée, en corrélant les deux courants de données avec la première séquence de données (76a, 76b), le courant de données dans lequel une pointe est générée pendant la corrélation avec la première séquence de données étant la première séquence de données traitée (76e).

17. Procédé selon la revendication 15 ou 16, présentant, par ailleurs, l'étape suivante consistant à :
extraire (72) du signal audio le second canal d'informations en corrélant le signal audio avec la seconde séquence de codes, pour obtenir le second canal d'informations ;
utiliser (84c) la première unité d'informations extraite comme signal de synchronisation (82), pour synchroniser le second canal d'informations avec le premier canal d'informations ; et
déterminer (84) les unités d'informations à partir du second canal d'informations à l'aide du signal de synchronisation.

18. Procédé selon la revendication 17, dans lequel le second canal d'informations présente également des courants de données emboîtés qui sont emboîtés selon la même prescription d'emboîtement que le premier canal d'informations, le procédé présentant, par ailleurs, les étapes suivantes consistant à :
démultiplexer (84a) le second canal d'informations en courants de données du second canal d'informations ; et
déterminer (84b) quel courant de données parmi les courants de données du second canal d'informations représente quelle unité d'informations, à l'aide de l'association acquise à l'étape de constatation (76) pour le premier canal d'informations.

19. Procédé selon l'une des revendications 15 à 18, dans lequel l'étape d'extraction (70) du premier canal d'informations présente les étapes suivantes consistant à :
sélectionner (90, 98) des pointes générées par la corrélation, pour générer un signal qui n'est plus composé que d'impulsions précédées d'un signe positif ou négatif ;
déterminer (100) le signal duquel est précédée chaque pointe ; et
générer des impulsions à partir des pointes, chaque impulsion ne pouvant avoir que l'un parmi deux états, les états des impulsions étant déterminés par les signes précédant les pointes, pour générer le premier canal d'informations.

20. Procédé selon l'une des revendications 15 à 19, dans lequel est réalisée, aux étapes d'extraction (78) de la première unité d'informations et d'extraction (80) de la seconde unité d'informations, une décision de valeur de seuil (78b, 80b), de sorte que soit généré un signal positif ou négatif lorsqu'une valeur de résultat de la corrélation excède un seuil prédéterminé.

21. Procédé selon l'une des revendications 15 à 20, dans lequel les unités d'informations sont représentées par des signaux binaires ayant un niveau positif ou négatif.

22. Procédé selon la revendication 21, dans lequel est constaté, à l'étape d'extraction de la première unité d'informations, le signe précédant le niveau de signal représentant la première unité d'informations,
dans lequel est constaté, à l'étape de l'extraction de la seconde unité d'informations, le signe précédant le niveau de signal représentant la seconde unité d'informations, et comparé au signe précédant le niveau de signal représentant la première unité d'informations, et
dans lequel est déterminée, pour la seconde unité d'informations, une première valeur lorsque les deux signes sont identiques ou est déterminée une seconde valeur lorsque les deux signes sont différents.

23. Procédé selon l'une des revendications 15 à 22, dans lequel la première unité d'informations indique qu'il est effectivement introduit des informations dans le signal audio à décoder, et
dans lequel la seconde unité d'informations comporte des informations d'autorisation de copie.

24. Procédé selon l'une des revendications 16 à 23, dans lequel le second canal d'informations comporte des informations sur l'utilisateur du signal audio et/ou une caractérisation du signal audio.

25. Dispositif pour introduire des informations dans un signal audio, les informations présentant une pluralité d'unités d'information, aux caractéristiques suivantes :
un dispositif destiné à alimenter (16a) une première séquence de données par une première unité d'informations, pour obtenir une première séquence de données traitée portant les informations de la première unité d'informations ;
un dispositif destiné à alimenter (16b) une seconde séquence de données par une seconde unité d'informations, pour obtenir une seconde séquence de données traitée portant les informations de la seconde unité d'informations, la seconde séquence de données étant différente de la première séquence de données ;
un dispositif destiné à multiplexer (18) la première séquence de données traitée et la seconde séquence de données traitée, pour obtenir un courant de données multiplexe dans le temps présentant la première séquence de données traitée et la seconde séquence de données traitée, le courant de données multiplexe dans le temps formant un premier canal d'informations ;
un dispositif destiné à former (20) un second canal d'informations présentant d'autres unités d'information des informations à introduire dans le signal audio, la longueur du second canal d'informations étant égale à la longueur du premier canal d'informations ;
un dispositif destiné à alimenter (22) le premier canal d'informations par une première séquence de codes, pour obtenir un premier canal d'informations dispersé;
un dispositif destiné à alimenter (24) le second canal d'informations par une seconde séquence de codes différente de la première séquence de codes, pour obtenir un second canal d'informations dispersé, le premier et le second canal d'informations étant de même longueur ;
un dispositif destiné à additionner (26) le premier et le second canal d'informations dispersé, pour générer un signal dans le temps multiplexe par répartition du code et présentant les informations à introduire ;
un dispositif destiné à générer (28) une représentation spectrale du signal dans le temps multiplexe par répartition du code;
un dispositif destiné à calculer (30) un seuil de masquage du signal audio ;
un dispositif destiné à pondérer (32) la représentation spectrale du signal dans le temps multiplexe par répartition du code, de sorte que l'énergie de la représentation spectrale pondérée du signal dans le temps multiplexe par répartition du code n'excède pas substantiellement le seuil de masquage du signal audio ; et
un dispositif destiné à combiner (34) la représentation spectrale pondérée avec le signal audio, pour générer un signal audio dans lequel sont introduites les informations.

26. Dispositif pour déterminer des informations introduites dans un signal audio, les informations étant présentes dans deux canaux d'informations dispersés, au premier canal d'informations dispersé étant associée une première séquence de codes et au second canal d'informations dispersé étant associée une seconde séquence de codes, le premier canal d'informations présentant une séquence de données multiplex dans le temps comportant une première séquence de données traitée et une seconde séquence de données traitée, et la première séquence de données traitée représentant une première unité d'informations et la seconde séquence de données traitée une seconde unité d'informations des informations traitées, aux caractéristiques suivantes :
un dispositif destiné à extraire (70) du signal audio le premier canal d'informations en corrélant le signal audio avec la première séquence de codes ;
un dispositif destiné à constater (76) la première séquence de données traitée dans le premier canal d'informations en corrélant (76a, 76b) le premier canal d'informations avec la première séquence de données, une première séquence de données traitée étant présente lorsqu'il se présente une pointe pendant la corrélation ;
un dispositif destiné à extraire (78a, 78b) de la première séquence de données traitée la première unité d'informations ; et
un dispositif destiné à extraire (80a, 80b) de la seconde séquence de données traitée la seconde unité d'informations en corrélant l'autre courant de données avec la seconde séquence de données.

27. Dispositif selon la revendication 26, dans lequel le premier et le second canal d'informations sont emboîtés selon une prescription d'emboîtement, présentant, par ailleurs, la caractéristique suivante :
un dispositif destiné à démultiplexer (74) le premier canal d'informations à l'aide de la prescription d'emboîtement, pour obtenir deux courants de données dont l'un est la première séquence de données traitée et l'autre est la seconde séquence de données traitée ;
et dans lequel le dispositif de constatation est disposé de manière à constater lequel des deux courants de données représente la première séquence de données traitée, en ce que les deux courants de données peuvent être corrélés avec la première séquence de données (76a, 76b), le courant de données dans lequel est générée une pointe pendant la corrélation avec la première séquence de données étant la première séquence de données traitée (76e).
